# EUROPEAN PATENT APPLICATION

(11) **EP 3 902 304 A1**
(43) Date of publication of application: **27.10.2021**
(21) Application number: 20738073.4
(22) Date of filing: 06.01.2020
(51) Int. Cl.: H04W 12/06

(54) **WIRELESS NETWORK COMMUNICATION METHOD, NETWORK DEVICE, AND TERMINAL**

(30) Priority: 11.01.2019 CN 201910028742
(71) Applicant: Huawei Technologies Co., Ltd., Longgang Shenzhen, Guangdong 518129 (CN)
(72) Inventor: ZHANG, Chengchen, Shenzhen, Guangdong 518129 (CN); SHU, Lin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: Epping - Hermann - Fischer
(86) International application number: PCT/CN2020/070443
(87) International publication number: WO 2020/143569

(57) **Abstract**

This application provides a wireless network communication method, a network device, and a terminal. The method includes: An uncrewed aerial vehicle traffic management entity receives an authorization request. The uncrewed aerial vehicle traffic management entity sends an authorization response. The authorization request is used to request authorization to control an uncrewed aerial vehicle by a terminal, and the authorization response is used to indicate whether the terminal is allowed to control the uncrewed aerial vehicle. Alternatively, the authorization request is used to request authorization to pair a terminal with an uncrewed aerial vehicle controller, and the authorization response is used to indicate whether the terminal is allowed to be paired with the uncrewed aerial vehicle controller. An uncrewed aerial vehicle traffic management entity in a mobile communication network is used to authorize or pair an uncrewed aerial vehicle controller and an uncrewed aerial vehicle, thereby facilitating long-distance communication between the uncrewed aerial vehicle controller and the uncrewed aerial vehicle.

## Description

This application claims priority to Chinese Patent Application No. 201910028742.8, filed with the China Patent Office on January 11, 2019 and entitled "WIRELESS NETWORK COMMUNICATION METHOD, NETWORK DEVICE, AND TERMINAL", which is incorporated herein by reference in its entirety.

### TECHNICAL FIELD

Embodiments of this application relate to the communication field, and more specifically, to a wireless network communication method, a network device, and a terminal.

### BACKGROUND

An uncrewed aerial system (unmanned aerial system, UAS) includes an uncrewed aerial vehicle controller and an uncrewed aerial vehicle (unmanned aerial vehicle, UAV). With rapid development of the uncrewed aerial vehicle industry, a scenario of communication between the uncrewed aerial vehicle controller and the uncrewed aerial vehicle is changing.

Currently, most application scenarios of the uncrewed aerial vehicle are short-distance scenarios. The uncrewed aerial vehicle controller and the uncrewed aerial vehicle may be paired and connected by using a wireless fidelity (wireless fidelity, Wi-Fi) technology or a Bluetooth low energy (Bluetooth low energy, BLE) technology, to implement bidirectional communication between the uncrewed aerial vehicle and the uncrewed aerial vehicle controller used as a control apparatus.

However, this connection mode cannot meet a communication requirement of the uncrewed aerial system in a long-distance scenario, especially, in a non-line-of-sight scenario.

### SUMMARY

Embodiments of this application provide a wireless network communication method, a network device, and a terminal, to implement network authorization and pairing between an uncrewed aerial vehicle controller and an uncrewed aerial vehicle, thereby facilitating long-distance communication between the uncrewed aerial vehicle controller and the uncrewed aerial vehicle.

According to a first aspect, a wireless communication method is provided, including: An uncrewed aerial vehicle traffic management entity receives an authorization request. The uncrewed aerial vehicle traffic management entity sends an authorization response. The authorization request is used to request authorization to control an uncrewed aerial vehicle by a terminal, and the authorization response is used to indicate whether the terminal is allowed to control the uncrewed aerial vehicle. Alternatively, the authorization request is used to request authorization to pair a terminal with an uncrewed aerial vehicle controller, and the authorization response is used to indicate whether the terminal is allowed to be paired with the uncrewed aerial vehicle controller.

The uncrewed aerial vehicle traffic management entity in a mobile communication network is used to authorize or pair the uncrewed aerial vehicle controller and the uncrewed aerial vehicle, thereby facilitating long-distance communication between the uncrewed aerial vehicle controller and the uncrewed aerial vehicle.

With reference to the first aspect, in a possible implementation, that an uncrewed aerial vehicle traffic management entity receives an authorization request includes: The uncrewed aerial vehicle traffic management entity receives the authorization request from the terminal. That the uncrewed aerial vehicle traffic management entity sends an authorization response includes: The uncrewed aerial vehicle traffic management entity sends the authorization response to the terminal.

Direct interaction between the terminal and the uncrewed aerial vehicle traffic management entity implements authorization or pairing between the uncrewed aerial vehicle controller and the uncrewed aerial vehicle, thereby facilitating long-distance communication between the uncrewed aerial vehicle controller and the uncrewed aerial vehicle. In addition, direct interaction between the terminal and the uncrewed aerial vehicle traffic management entity can improve efficiency.

With reference to the first aspect, in a possible implementation, that an uncrewed aerial vehicle traffic management entity receives an authorization request includes: The uncrewed aerial vehicle traffic management entity receives the authorization request from an access and mobility management function network element AMF. That the uncrewed aerial vehicle traffic management entity sends an authorization response includes: The uncrewed aerial vehicle traffic management entity sends the authorization response to the AMF

With reference to the first aspect, in a possible implementation, the authorization request is carried in a non-access stratum message.

With reference to the first aspect, in a possible implementation, that an uncrewed aerial vehicle traffic management entity receives an authorization request includes: The uncrewed aerial vehicle traffic management entity receives the authorization request from a session management function network element SMF. That the uncrewed aerial vehicle traffic management entity sends an authorization response includes: The uncrewed aerial vehicle traffic management entity sends the authorization response to the SMF.

A process of requesting network authorization and pairing between the uncrewed aerial vehicle controller and the uncrewed aerial vehicle may be completed in another existing procedure. This more conveniently implements authorization or pairing of an uncrewed aerial system.

With reference to the first aspect, in a possible implementation, the authorization request is carried in a protocol data unit PDU session establishment message, and the authorization response is carried in a PDU session establishment accept message.

With reference to the first aspect, in a possible implementation, the authorization request is carried in a protocol data unit PDU session modification message, and the authorization response is carried in a PDU session modification accept message.

With reference to the first aspect, in a possible implementation, the authorization request is carried in a service request message, and the authorization response is carried in a service accept message.

With reference to the first aspect, in a possible implementation, the method further includes: The uncrewed aerial vehicle traffic management entity generates the authorization response based on one or more types of information in the authorization request, subscription information of the terminal, and local configuration information of the uncrewed aerial vehicle traffic management entity.

With reference to the first aspect, in a possible implementation, the authorization request includes information about the uncrewed aerial vehicle that the terminal requests to control. Alternatively, the authorization request includes information about the uncrewed aerial vehicle controller that the terminal requests to be paired with.

With reference to the first aspect, in a possible implementation, the authorization request includes an identifier of the uncrewed aerial vehicle that the terminal requests to control. Alternatively, the authorization request includes an identifier of the uncrewed aerial vehicle controller that the terminal requests to be paired with.

With reference to the first aspect, in a possible implementation, the authorization response includes information about an uncrewed aerial vehicle that the terminal is allowed to control. Alternatively, the authorization response includes information about an uncrewed aerial vehicle controller that the terminal is allowed to be paired with.

With reference to the first aspect, in a possible implementation, the authorization response includes an identifier of the uncrewed aerial vehicle that the terminal is allowed to control. Alternatively, the authorization response includes an identifier of the uncrewed aerial vehicle controller that the terminal is allowed to be paired with.

With reference to the first aspect, in a possible implementation, the authorization response includes an identifier of an uncrewed aerial system including the uncrewed aerial vehicle and the uncrewed aerial vehicle controller that are allowed to be paired with each other.

According to a second aspect, a wireless network communication method is provided, including: A terminal sends an authorization request to an uncrewed aerial vehicle traffic management entity. The terminal receives an authorization response from the uncrewed aerial vehicle traffic management entity. The authorization request is used to request authorization to control an uncrewed aerial vehicle by the terminal, and the authorization response is used to indicate whether the terminal is allowed to control the uncrewed aerial vehicle. Alternatively, the authorization request is used to request authorization to pair the terminal with an uncrewed aerial vehicle controller, and the authorization response is used to indicate whether the terminal is allowed to be paired with the uncrewed aerial vehicle controller.

Direct interaction between the terminal and the uncrewed aerial vehicle traffic management entity implements authorization or pairing between the uncrewed aerial vehicle controller and the uncrewed aerial vehicle, thereby facilitating long-distance communication between the uncrewed aerial vehicle controller and the uncrewed aerial vehicle. In addition, direct interaction between the terminal and the uncrewed aerial vehicle traffic management entity can improve efficiency.

With reference to the second aspect, in a possible implementation, the authorization request includes information about the uncrewed aerial vehicle that the terminal requests to control. Alternatively, the authorization request includes information about the uncrewed aerial vehicle controller that the terminal requests to be paired with.

With reference to the second aspect, in a possible implementation, the authorization request includes an identifier of the uncrewed aerial vehicle that the terminal requests to control. Alternatively, the authorization request includes an identifier of the uncrewed aerial vehicle controller that the terminal requests to be paired with.

With reference to the second aspect, in a possible implementation, the authorization response includes information about an uncrewed aerial vehicle that the terminal is allowed to control. Alternatively, the authorization response includes information about an uncrewed aerial vehicle controller that the terminal is allowed to be paired with.

With reference to the second aspect, in a possible implementation, the authorization response includes an identifier of the uncrewed aerial vehicle that the terminal is allowed to control. Alternatively, the authorization response includes an identifier of the uncrewed aerial vehicle controller that the terminal is allowed to be paired with.

With reference to the second aspect, in a possible implementation, the authorization response includes an identifier of an uncrewed aerial system including the uncrewed aerial vehicle and the uncrewed aerial vehicle controller that are allowed to be paired with each other.

According to a third aspect, a wireless network communication method is provided, including: A terminal sends indication information to an access and mobility management function network element AMF in a registration process of the terminal. The terminal receives a registration response from the AMF. The indication information is used to indicate that the terminal requests to control an uncrewed aerial vehicle, and the registration response is used to indicate whether the terminal is allowed to control the uncrewed aerial vehicle. Alternatively, the indication information is used to indicate that the terminal requests to be paired with an uncrewed aerial vehicle controller, and the registration response is used to indicate whether the terminal is allowed to be paired with the uncrewed aerial vehicle controller.

In the registration procedure of the terminal, network authorization or pairing between the uncrewed aerial vehicle controller and the uncrewed aerial vehicle is completed, thereby implementing network authorization and pairing of an uncrewed aerial system, thereby facilitating long-distance communication between the uncrewed aerial vehicle controller and the uncrewed aerial vehicle, and further improves efficiency.

With reference to the third aspect, in a possible implementation, the method further includes: The terminal sends, to the AMF, information about the uncrewed aerial vehicle that the terminal requests to control. Alternatively, The terminal sends, to the AMF, information about the uncrewed aerial vehicle controller that the terminal requests to be paired with.

With reference to the third aspect, in a possible implementation, the method further includes: The terminal sends, to the AMF, an identifier of the uncrewed aerial vehicle that the terminal requests to control. Alternatively, The terminal sends, to the AMF, an identifier of the uncrewed aerial vehicle controller that the terminal requests to be paired with.

With reference to the third aspect, in a possible implementation, when the AMF determines that the terminal is not allowed to control the uncrewed aerial vehicle, the registration response is used to reject the terminal to be registered.

With reference to the third aspect, in a possible implementation, when the AMF determines that the terminal is not allowed to control the uncrewed aerial vehicle, the registration response is used to indicate that the terminal is successfully registered and indicate that the terminal is not allowed to control the uncrewed aerial vehicle.

With reference to the third aspect, in a possible implementation, when the AMF indicates that the terminal is allowed to control the uncrewed aerial vehicle, the registration response is used to indicate that the terminal is successfully registered, and indicate that the terminal is allowed to control the uncrewed aerial vehicle and/or indicate whether the terminal is allowed to control the uncrewed aerial vehicle.

With reference to the third aspect, in a possible implementation, the indication information is further used to indicate whether the terminal is only used to control the uncrewed aerial vehicle. When the indication information indicates that the terminal is only used to control the uncrewed aerial vehicle, and the AMF determines that the terminal is not allowed to control the uncrewed aerial vehicle, the registration response is used to reject the terminal to be registered. Alternatively, when the indication information indicates that the terminal is not only used to control the uncrewed aerial vehicle, and the AMF determines that the terminal is not allowed to control the uncrewed aerial vehicle, the registration response is used to indicate that the terminal is successfully registered and indicate that the terminal is not allowed to control the uncrewed aerial vehicle.

In addition to a function of the uncrewed aerial vehicle controller, the terminal can further have another function. In the technical solution of this application, in the registration procedure, when the terminal requests network authorization, the terminal is indicated whether the terminal is only used to control the uncrewed aerial vehicle, thereby implementing authorization on the uncrewed aerial vehicle controller, and further implementing registration of different types of uncrewed aerial vehicle controllers.

With reference to the third aspect, in a possible implementation, the registration response includes information about the uncrewed aerial vehicle that the terminal is allowed to control. Alternatively, the registration response includes information about the uncrewed aerial vehicle controller that the terminal is allowed to be paired with.

With reference to the third aspect, in a possible implementation, the registration response includes an identifier of the uncrewed aerial vehicle that the terminal is allowed to control. Alternatively, the registration response includes an identifier of the uncrewed aerial vehicle controller that the terminal is allowed to be paired with.

With reference to the third aspect, in a possible implementation, the registration response further includes an identifier of an uncrewed aerial system including the uncrewed aerial vehicle and the uncrewed aerial vehicle controller that are allowed to be paired with each other.

According to a fourth aspect, a wireless network communication method is provided, including: A core network element sends an authorization request to an uncrewed aerial vehicle traffic management entity. The core network element receives an authorization response from the uncrewed aerial vehicle traffic management entity. The authorization request is used to request authorization to control an uncrewed aerial vehicle by a terminal, and the authorization response is used to indicate whether the terminal is allowed to control the uncrewed aerial vehicle. Alternatively, the authorization request is used to request authorization to pair a terminal with an uncrewed aerial vehicle controller, and the authorization response is used to indicate whether the terminal is allowed to be paired with the uncrewed aerial vehicle controller.

With reference to the fourth aspect, in a possible implementation, before that a core network element sends an authorization request to an uncrewed aerial vehicle traffic management entity, the method further includes: receiving indication information sent by the terminal, where the indication information is used to indicate that the terminal requests to control the uncrewed aerial vehicle; or the indication information is used to indicate that the terminal requests to be paired with the uncrewed aerial vehicle controller.

With reference to the fourth aspect, in a possible implementation, the method further includes: The core network element generates a registration response based on the authorization response. When the authorization response indicates that the terminal is allowed to control the uncrewed aerial vehicle, the registration response is used to indicate that the terminal is successfully registered, and indicate that the terminal is allowed to control the uncrewed aerial vehicle and/or indicate whether the terminal is allowed to control the uncrewed aerial vehicle.

With reference to the fourth aspect, in a possible implementation, when the authorization response indicates that the terminal is not allowed to control the uncrewed aerial vehicle, the registration response is used to reject the terminal to be registered.

With reference to the fourth aspect, in a possible implementation, when the authorization response indicates that the terminal is not allowed to control the uncrewed aerial vehicle, the registration response is used to indicate that the terminal is successfully registered and indicate that the terminal is not allowed to control the uncrewed aerial vehicle.

With reference to the fourth aspect, in a possible implementation, the indication information is further used to indicate whether the terminal is only used to control the uncrewed aerial vehicle. When the indication information indicates that the terminal is only used to control the uncrewed aerial vehicle, and the authorization response indicates that the terminal is not allowed to control the uncrewed aerial vehicle, the registration response is used to reject the terminal to be registered. Alternatively, when the indication information indicates that the terminal is not only used to control the uncrewed aerial vehicle, and the authorization response indicates that the terminal is not allowed to control the uncrewed aerial vehicle, the registration response is used to indicate that the terminal is successfully registered and indicate that the terminal is not allowed to control the uncrewed aerial vehicle.

Registration authorization and pairing of the uncrewed aerial vehicle controller or the uncrewed aerial vehicle is completed in a registration procedure of the terminal, thereby resolving an issue of accessing a network by an uncrewed aerial system. In addition, whether the terminal is only used to control the uncrewed aerial vehicle is indicated in the registration procedure, thereby implementing registration authorization performed by a network side on different types of uncrewed aerial vehicle controllers.

With reference to the fourth aspect, in a possible implementation, the core network element is an access and mobility management function network element AMF or a session management function network element SMF.

With reference to the fourth aspect, in a possible implementation, the method further includes: The core network element receives, from the terminal, information about the uncrewed aerial vehicle that the terminal requests to control. Alternatively, the core network element receives, from the terminal, information about the uncrewed aerial vehicle controller that the terminal requests to be paired with.

With reference to the fourth aspect, in a possible implementation, the method further includes: The core network element receives, from the terminal, an identifier of the uncrewed aerial vehicle that the terminal requests to control. Alternatively, the core network element receives, from the terminal, an identifier of the uncrewed aerial vehicle controller that the terminal requests to be paired with.

With reference to the fourth aspect, in a possible implementation, the authorization request includes information about the uncrewed aerial vehicle that the terminal requests to control. Alternatively, the authorization request includes information about the uncrewed aerial vehicle controller that the terminal requests to be paired with.

With reference to the fourth aspect, in a possible implementation, the authorization request includes the identifier of the uncrewed aerial vehicle that the terminal requests to control. Alternatively, the authorization request includes the identifier of the uncrewed aerial vehicle controller that the terminal requests to be paired with.

With reference to the fourth aspect, in a possible implementation, the authorization response includes information about the uncrewed aerial vehicle that the terminal is allowed to control. Alternatively, the authorization response includes information about the uncrewed aerial vehicle controller that the terminal is allowed to be paired with.

With reference to the fourth aspect, in a possible implementation, the authorization response includes an identifier of the uncrewed aerial vehicle that the terminal is allowed to control. Alternatively, the authorization response includes an identifier of the uncrewed aerial vehicle controller that the terminal is allowed to be paired with.

With reference to the fourth aspect, in a possible implementation, the authorization response further includes an identifier of an uncrewed aerial system including the uncrewed aerial vehicle and the uncrewed aerial vehicle controller that are allowed to be paired with each other.

According to a fifth aspect, a wireless network communication method is provided, including: A terminal sends an authorization request to an uncrewed aerial vehicle traffic management entity. The uncrewed aerial vehicle traffic management entity sends an authorization response to the terminal. The authorization request is used to request authorization to control an uncrewed aerial vehicle by the terminal, and the authorization response is used to indicate whether the terminal is allowed to control the uncrewed aerial vehicle. Alternatively, the authorization request is used to request authorization to pair the terminal with an uncrewed aerial vehicle controller, and the authorization response is used to indicate whether the terminal is allowed to be paired with the uncrewed aerial vehicle controller.

With reference to the fifth aspect, in a possible implementation, the authorization request includes an identifier of the uncrewed aerial vehicle that the terminal requests to control. Alternatively, the authorization request includes an identifier of the uncrewed aerial vehicle controller that the terminal requests to be paired with.

With reference to the fifth aspect, in a possible implementation, the authorization response includes an identifier of an uncrewed aerial vehicle that the terminal is allowed to control. Alternatively, the authorization response includes an identifier of an uncrewed aerial vehicle controller that the terminal is allowed to be paired with.

With reference to the fifth aspect, in a possible implementation, the authorization request includes information about the terminal.

With reference to the fifth aspect, in a possible implementation, the authorization response includes an identifier of an uncrewed aerial system including the uncrewed aerial vehicle and the uncrewed aerial vehicle controller that are allowed to be paired with each other.

With reference to the fifth aspect, in a possible implementation, the method further includes: The uncrewed aerial vehicle traffic management entity sends, to a unified data management function network element, a message for requesting to obtain subscription information of the terminal. The unified data management function network element sends the subscription information of the terminal to the uncrewed aerial vehicle traffic management entity.

According to a sixth aspect, a wireless network communication method is provided, including: A core network element sends an authorization request to an uncrewed aerial vehicle traffic management entity. The uncrewed aerial vehicle traffic management entity sends an authorization response to the core network element. The authorization request is used to request authorization to control an uncrewed aerial vehicle by a terminal, and the authorization response is used to indicate whether the terminal is allowed to control the uncrewed aerial vehicle. Alternatively, the authorization request is used to request authorization to pair a terminal with an uncrewed aerial vehicle controller, and the authorization response is used to indicate whether the terminal is allowed to be paired with the uncrewed aerial vehicle controller.

With reference to the sixth aspect, in a possible implementation, the authorization request includes an identifier of the uncrewed aerial vehicle that the terminal requests to control. Alternatively, the authorization request includes an identifier of the uncrewed aerial vehicle controller that the terminal requests to be paired with.

With reference to the sixth aspect, in a possible implementation, the authorization response includes an identifier of an uncrewed aerial vehicle that the terminal requests to control. Alternatively, the authorization response includes an identifier of an uncrewed aerial vehicle controller that the terminal is allowed to be paired with.

With reference to the sixth aspect, in a possible implementation, the authorization request includes information about the terminal.

With reference to the sixth aspect, in a possible implementation, the authorization response includes an identifier of an uncrewed aerial system including the uncrewed aerial vehicle and the uncrewed aerial vehicle controller that are allowed to be paired with each other.

With reference to the sixth aspect, in a possible implementation, the core network element is an access and mobility management function network element AMF or a session management function network element SMF.

With reference to the sixth aspect, in a possible implementation, the method further includes: The uncrewed aerial vehicle traffic management entity sends, to a unified data management function network element, a message for requesting to obtain subscription information of the terminal. The unified data management function network element sends the subscription information of the terminal to the uncrewed aerial vehicle traffic management entity.

According to a seventh aspect, a wireless network communication method is provided, including: A terminal sends first information to a core network element. The core network element sends second information to the terminal. The first information is used to request authorization to control an uncrewed aerial vehicle by the terminal, and the second information is used to indicate whether the terminal is allowed to control the uncrewed aerial vehicle. Alternatively, the first information is used to request authorization to pair the terminal with an uncrewed aerial vehicle controller, and the second information is used to indicate whether the terminal is allowed to be paired with the uncrewed aerial vehicle controller.

With reference to the seventh aspect, in a possible implementation, the first information includes an identifier of the uncrewed aerial vehicle that the terminal requests to control. Alternatively, the first information includes an identifier of the uncrewed aerial vehicle controller that the terminal requests to be paired with.

With reference to the seventh aspect, in a possible implementation, the second information includes an identifier of an uncrewed aerial vehicle that the terminal is allowed to control. Alternatively, the second information includes an identifier of an uncrewed aerial vehicle controller that the terminal is allowed to be paired with.

With reference to the seventh aspect, in a possible implementation, the core network element is an access and mobility management function network element AMF or a session management function network element SMF.

With reference to the seventh aspect, in a possible implementation, the first information is a registration request, and the second information is a registration response.

With reference to the seventh aspect, in a possible implementation, the method further includes: The core network element sends an authorization request to the uncrewed aerial vehicle traffic management entity. The uncrewed aerial vehicle traffic management entity sends an authorization response to the core network element. The authorization request is used to request authorization to control the uncrewed aerial vehicle by the terminal, and the authorization response is used to indicate whether the terminal is allowed to control the uncrewed aerial vehicle. Alternatively, the authorization request is used to request authorization to pair the terminal with the uncrewed aerial vehicle controller, and the authorization response is used to indicate whether the terminal is allowed to be paired with the uncrewed aerial vehicle controller.

With reference to the seventh aspect, in a possible implementation, the authorization request includes the identifier of the uncrewed aerial vehicle that the terminal requests to control. Alternatively, the authorization request includes the identifier of the uncrewed aerial vehicle controller that the terminal requests to be paired with.

With reference to the seventh aspect, in a possible implementation, the authorization response includes the identifier of the uncrewed aerial vehicle that the terminal is allowed to control. Alternatively, the authorization response includes the identifier of the uncrewed aerial vehicle controller that the terminal is allowed to be paired with.

With reference to the seventh aspect, in a possible implementation, the method further includes: The uncrewed aerial vehicle traffic management entity sends, to a unified data management function network element, a message for requesting to obtain subscription information of the terminal. The unified data management function network element sends the subscription information of the terminal to the uncrewed aerial vehicle traffic management entity.

According to an eighth aspect, a wireless communication method is provided, including: A first core network element sends third information to a second core network element. The second core network element sends fourth information to the first core network element. The third information is used to request authorization to control an uncrewed aerial vehicle by a terminal, and the fourth information is used to indicate whether the terminal is allowed to control the uncrewed aerial vehicle. Alternatively, the third information is used to request authorization to pair a terminal with an uncrewed aerial vehicle controller, and the fourth information is used to indicate whether the terminal is allowed to be paired with the uncrewed aerial vehicle controller.

With reference to the eighth aspect, in a possible implementation, the third information includes an identifier of the uncrewed aerial vehicle that the terminal requests to control. Alternatively, the third information includes an identifier of the uncrewed aerial vehicle controller that the terminal requests to be paired with.

With reference to the eighth aspect, in a possible implementation, the fourth information includes an identifier of an uncrewed aerial vehicle that the terminal is allowed to control. Alternatively, the fourth information includes an identifier of an uncrewed aerial vehicle controller that the terminal is allowed to be paired with.

With reference to the eighth aspect, in a possible implementation, the method further includes: The second core network element sends fifth information to a third core network element. The third core network element sends sixth information to the second core network element. The fifth information is used to request authorization to control the uncrewed aerial vehicle by the terminal, and the sixth information is used to indicate whether the terminal is allowed to control the uncrewed aerial vehicle. Alternatively, the fifth information is used to request authorization to pair the terminal with the uncrewed aerial vehicle controller, and the sixth information is used to indicate whether the terminal is allowed to be paired with the uncrewed aerial vehicle controller.

With reference to the eighth aspect, in a possible implementation, the fifth information includes the identifier of the uncrewed aerial vehicle that the terminal requests to control. Alternatively, the fifth information includes the identifier of the uncrewed aerial vehicle controller that the terminal requests to be paired with.

With reference to the eighth aspect, in a possible implementation, the sixth information includes the identifier of the uncrewed aerial vehicle that the terminal is allowed to control. Alternatively, the sixth information includes the identifier of the uncrewed aerial vehicle controller that the terminal is allowed to be paired with.

According to a ninth aspect, a network device is provided, including a module configured to perform the foregoing method, step, operation, or function performed by the foregoing uncrewed aerial vehicle traffic management entity.

According to a tenth aspect, a terminal is provided, including a module configured to perform the foregoing method, step, operation, or function performed by the foregoing terminal.

According to an eleventh aspect, a network device is provided. The network device is a module that performs the foregoing method, step, operation, or function performed by the foregoing core network element.

According to a twelfth aspect, a communication apparatus is provided. The communication apparatus includes at least one processor and a communication interface. The communication interface is used by the communication apparatus to exchange information with another communication apparatus. When a program instruction is executed in the at least one processor, the communication apparatus is enabled to implement a function of the foregoing uncrewed aerial vehicle traffic management entity.

According to a thirteenth aspect, a communication apparatus is provided. The communication apparatus includes at least one processor and a communication interface. The communication interface is used by the communication apparatus to exchange information with another communication apparatus. When a program instruction is executed in the at least one processor, the communication apparatus is enabled to implement a function of the foregoing terminal.

According to a fourteenth aspect, a communication apparatus is provided. The communication apparatus includes at least one processor and a communication interface. The communication interface is used by the communication apparatus to exchange information with another communication apparatus. When a program instruction is executed in the at least one processor, the communication apparatus is enabled to implement a function of the foregoing core network element.

According to a fifteenth aspect, a computer program storage medium is provided. The computer program storage medium has a program instruction. When the program instruction is directly or indirectly executed, a function of the foregoing uncrewed aerial vehicle traffic management entity is enabled to be implemented.

According to a sixteenth aspect, a computer program storage medium is provided. The computer program storage medium has a program instruction. When the program instruction is directly or indirectly executed, a function of the foregoing terminal is enabled to be implemented.

According to a seventeenth aspect, a computer program storage medium is provided. The computer program storage medium has a program instruction. When the program instruction is directly or indirectly executed, a function of the foregoing core network element is enabled to be implemented.

According to an eighteenth aspect, a chip system is provided. The chip system includes at least one processor. When a program instruction is executed in the at least one processor, a function of the foregoing uncrewed aerial vehicle traffic management entity is enabled to be implemented.

According to a nineteenth aspect, a chip system is provided. The chip system includes at least one processor. When a program instruction is executed in the at least one processor, a function of the foregoing terminal is enabled to be implemented.

According to a twentieth aspect, a chip system is provided. The chip system includes at least one processor. When a program instruction is executed in the at least one processor, a function of the foregoing core network element is enabled to be implemented.

According to a twenty-first aspect, a computer program product is provided, including a program instruction. When the program instruction is directly or indirectly executed, a function of the foregoing uncrewed aerial vehicle traffic management entity is enabled to be implemented.

According to a twenty-second aspect, a computer program product is provided, including a program instruction. When the program instruction is directly or indirectly executed, a function of the foregoing terminal is enabled to be implemented.

According to a twenty-third aspect, a computer program product is provided, including a program instruction. When the program instruction is directly or indirectly executed, a function of the foregoing core network element is enabled to be implemented.

According to a twenty-fourth aspect, a communication system is provided, including the foregoing terminal and the foregoing uncrewed aerial vehicle traffic management entity. The terminal is configured to send an authorization request to the uncrewed aerial vehicle traffic management entity. The uncrewed aerial vehicle traffic management entity is configured to send an authorization response to the terminal. The authorization request is used to request authorization to control an uncrewed aerial vehicle by the terminal, and the authorization response is used to indicate whether the terminal is allowed to control the uncrewed aerial vehicle. Alternatively, the authorization request is used to request authorization to pair the terminal with an uncrewed aerial vehicle controller, and the authorization response is used to indicate whether the terminal is allowed to be paired with the uncrewed aerial vehicle controller.

Optionally, the communication system may further include a unified data management function network element.

According to a twenty-fifth aspect, a communication system is provided, including the foregoing core network element and the foregoing uncrewed aerial vehicle traffic management entity. The core network element is configured to send an authorization request to the uncrewed aerial vehicle traffic management entity. The uncrewed aerial vehicle traffic management entity is configured to send an authorization response to the core network element. The authorization request is used to request authorization to control an uncrewed aerial vehicle by a terminal, and the authorization response is used to indicate whether the terminal is allowed to control the uncrewed aerial vehicle. Alternatively, the authorization request is used to request authorization to pair a terminal with an uncrewed aerial vehicle controller, and the authorization response is used to indicate whether the terminal is allowed to be paired with the uncrewed aerial vehicle controller.

Optionally, the system may further include a unified data management function network element.

According to a twenty-sixth aspect, a communication system is provided, including the foregoing terminal and the foregoing core network element. The terminal is configured to send first information to the core network element. The core network element is configured to send second information to the terminal. The first information is used to request authorization to control an uncrewed aerial vehicle by the terminal, and the second information is used to indicate whether the terminal is allowed to control the uncrewed aerial vehicle. Alternatively, the first information is used to request authorization to pair the terminal with an uncrewed aerial vehicle controller, and the second information is used to indicate whether the terminal is allowed to be paired with the uncrewed aerial vehicle controller.

Optionally, the communication system may further include the foregoing uncrewed aerial vehicle traffic management entity.

Optionally, the communication system may further include the foregoing unified data management function network element.

According to a twenty-seventh aspect, a communication system is provided, including the foregoing first core network element and the foregoing second core network element. The first core network element is configured to send third information to the second core network element. The second core network element is configured to send fourth information to the first core network element. The third information is used to request authorization to control an uncrewed aerial vehicle by a terminal, and the fourth information is used to indicate whether the terminal is allowed to control the uncrewed aerial vehicle. Alternatively, the third information is used to request authorization to pair a terminal with an uncrewed aerial vehicle controller, and the fourth information is used to indicate whether the terminal is allowed to be paired with the uncrewed aerial vehicle controller.

Optionally, the communication system may further include the foregoing third core network element.

### BRIEF DESCRIPTION OF DRAWINGS

FIG. 1 is a schematic diagram of a network system architecture according to an embodiment of this application;
FIG. 2 is a schematic diagram of an application scenario according to an embodiment of this application;
FIG. 3 is a schematic flowchart of a wireless network communication method according to an embodiment of this application;
FIG. 4 is a schematic flowchart of a wireless network communication method according to another embodiment of this application;
FIG. 5 is a schematic flowchart of a wireless network communication method according to still another embodiment of this application;
FIG. 6 is a schematic structural diagram of a network device according to an embodiment of this application;
FIG. 7 is a schematic structural diagram of a communication apparatus according to an embodiment of this application;
FIG. 8 is a schematic structural diagram of a terminal according to another embodiment of this application;
FIG. 9 is a schematic structural diagram of a communication apparatus according to another embodiment of this application;
FIG. 10 is a schematic structural diagram of a terminal according to still another embodiment of this application;
FIG. 11 is a schematic structural diagram of a communication apparatus according to still another embodiment of this application;
FIG. 12 is a schematic structural diagram of a network device according to still another embodiment of this application; and
FIG. 13 is a schematic structural diagram of a communication apparatus according to still another embodiment of this application.

### DESCRIPTION OF EMBODIMENTS

The following describes technical solutions of embodiments in this application with reference to accompanying drawings.

In recent years, with rapid development of the uncrewed aerial vehicle industry, a scenario of communication between an uncrewed aerial vehicle controller and an uncrewed aerial vehicle is changing. For short-distance control, for example, in a short-distance scenario in which a civil uncrewed aerial vehicle is currently applied, an uncrewed aerial vehicle controller and the uncrewed aerial vehicle may be paired and connected by using a short-distance wireless technology such as Wi-Fi or Bluetooth, to implement bidirectional communication between the uncrewed aerial vehicle controller and the uncrewed aerial vehicle. However, with expansion of application scenarios of the uncrewed aerial vehicle, the short-distance wireless technology cannot meet a communication requirement of the uncrewed aerial vehicle controller and the uncrewed aerial vehicle in a long-distance scenario, especially, in a non-line-of-sight scenario.

A 3rd generation partnership project (the 3rd generation partner project, 3GPP) network has ubiquitous coverage, relatively high reliability and quality of service (quality of service, QoS) performance, robust security protection, and seamless mobility. In the future, an uncrewed aerial system is paired and connected through an access network or a core network, to implement long-distance communication.

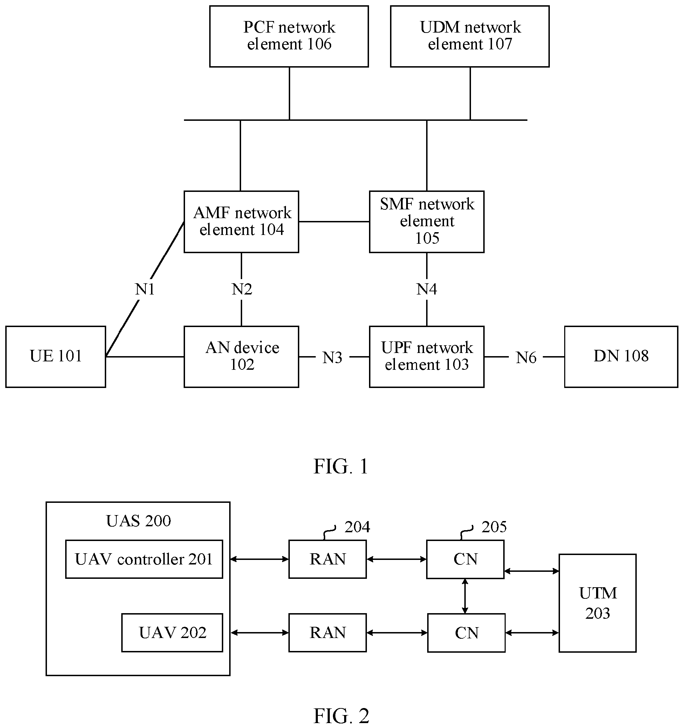

FIG. 1 is a schematic diagram of a network architecture according to an embodiment of this application. As shown in FIG. 1, the network architecture may specifically include the following network elements:
user equipment (user equipment, UE) 101, an access network (access network, AN) device 102, a user plane function (user plane function, UPF) network element 103, an access and mobility management function (access and mobility management function, AMF) network element 104, a session management function (session management function, SMF) network element 105, a policy control function (policy control function, PCF) network element 106, a unified data management (unified data management, UDM) network element 107, and a data network (data network, DN) 108.

The UE 10 1 may also be referred to as a terminal (terminal). The terminal may communicate with one or more core networks (core network, CN) through the AN device 102. The terminal may be referred to as an access terminal, a terminal, a subscriber unit, a subscriber station, a mobile station, a mobile console, a remote station, a remote terminal, a mobile device, a user terminal, a radio network device, a user agent, or a user apparatus. The terminal may be a cellular phone (cellular phone), a cordless phone, a session initiation protocol (session initiation protocol, SIP) phone, a smartphone (smart phone), a wireless localloop (wireless localloop, WLL) station, a personal digital assistant (personal digital assistant, PDA), a handheld device with a wireless communication function, a computing device or another device connected to a wireless modem, a vehicle-mounted device, a wearable device, an uncrewed aerial vehicle device or the internet of things, a terminal in the internet of vehicles, a terminal in any form in a future network, for example, a fifth generation (Fifth generation, 5G) network, a relay user equipment, a terminal in a future evolved public land mobile network (public land mobile network, PLMN), or the like. The relay user equipment may be, for example, a 5G residential gateway (residential gateway, RG). This is not limited in this embodiment of this application. For ease of description, the devices mentioned above are collectively referred to as a terminal in this application.

The AN device 102 may also be referred to as an access device. The access device is a device that can access the core network, for example, may be a radio access network (radio access network, RAN) device. The RAN device may also be referred to as a network device, and is an access device used by a terminal to access a mobile communication system in a wireless manner. An example of the RAN device is a base station (base station, BS), and the RAN device may also be referred to as a base station device.

The radio access network device may be a transmission reception point (transmission reception point, TRP) in a new radio technology (new radio access technology, NR) system, a next generation base station node (next generation node base station, gNB) in a 5G system, an evolved node B (evolved node B, eNB) in long term evolution (long term evolution, LTE), a base transceiver station (base transceiver station, BTS) in a global system for mobile communication (global system of mobile communication, GSM) or in code division multiple access (code division multiple access, CDMA), and may further be a radio network controller (radio network controller, RNC), a node B (node B, NB), a base station controller (base station controller, BSC), a home evolved base station (for example, a home evolved base station, or a home node B, HNB), a baseband unit (base band unit, BBU), a Wi-Fi access point (access point, AP), a small base station device (pico), a network device in a future 5G network, or the like.

It should be understood that a specific type of the network device is not limited in this specification. In systems using different radio access technologies, names of devices having functions of the network device vary. For ease of description, in all the embodiments of this application, all the foregoing apparatuses that provide a wireless communication function for the terminal are referred to as an access network device. Different access network devices may be located in a same cell, or may be located in different cells. This is not specifically limited herein.

The UPF network element 103 has functions such as packet forwarding, encapsulation, and statistics collection of the terminal, and is responsible for forwarding user data. An interface between the AN device 102 and the UPF network element 103 may be an N3 interface.

Optionally, the UPF network element is specifically divided into an intermediate-UPF (intermediate-UPF, I-UPF) and an anchor UPF (anchor-UPF, A-UPF). The I-UPF is connected to an access network RAN, the A-UPF is a UPF of a session anchor, and the A-UPF may also be referred to as a PDU session anchor UPF (PDU session anchor UPF, PSA). This is not limited in this embodiment of this application.

The AMF network element 104 is responsible for access and mobility management of the terminal, and has functions such as user authentication, handover, and location update. For example, the AMF network element 104 is responsible for UE location update, UE registration with a network, UE handover, or the like. An interface between the UE 101 and the AMF network element 104 may be an N1 interface, and an interface between the AN device 102 and the AMF network element 104 may be an N2 interface.

The SMF network element 105 is responsible for selection and reselection of the UPF network element 103, allocation of an internet protocol (internet protocol, IP) address, or the like; and may further be responsible for session establishment, modification, release, or the like. An interface between the SMF network element 105 and the UPF network element 103 may be an N4 interface.

Optionally, the SMF network element may specifically be classified into two types: an intermediate-SMF (intermediate-SMF, I-SMF) network element and an anchor SMF (anchor-SMF, A-SMF) network element. The I-SMF network element controls a user plane function (user plane function, UPF) network element (namely, an I-UPF) of an access network interface. The A-SMF network element controls a session anchor UPF network element (namely, an A-UPF).

The PCF network element 106 is configured to implement functions including a unified policy framework for managing a network behavior, providing, for a control plane, a policy rule that needs to be executed, obtaining subscription information related to policy decision, and the like. A policy includes both a mobility-related policy and a protocol data unit (protocol data unit, PDU) session-related policy, for example, a quality of service (quality of service, QoS) policy, and a charging policy.

The UDM network element 107 is configured to store user subscription data.

The DN 108 is an operator network that provides a data transmission service for the UE. For example, the DN may be a network that provides services such as an IP multimedia service (IP multi-media, IMS) and an internet service. An interface between the UPF network element 103 and the DN 108 may be an N6 interface.

It should be noted that in FIG. 1, only an example in which the terminal is UE is used for description. Names of interfaces between network elements in FIG. 1 are merely examples. In specific implementation, the names of the interfaces in the system architecture may be other names. This is not specifically limited in this embodiment of this application.

It should be understood that this embodiment of this application is not limited to the system architecture shown in FIG. 1. For example, a communication system to which the communication method in this embodiment of this application may be applied may include more or fewer network elements or devices. The devices or the network elements in FIG. 1 may be hardware, or may be software obtained through functional division, or a combination thereof. The devices or the network elements in FIG. 1 may communicate with each other through another device or network element.

An uncrewed aerial system includes an uncrewed aerial vehicle controller and an uncrewed aerial vehicle. Due to specialty of the uncrewed aerial vehicle occupying airspace, the supervision department needs to identify and control the uncrewed aerial vehicle in a timely manner. Therefore, a new entity, namely, an uncrewed aerial vehicle traffic management entity (unmanned aerial vehicle traffic management, UTM) is introduced to a 3GPP network. The UTM may store data related to the uncrewed aerial vehicle controller and the uncrewed aerial vehicle, such as identification information, owner information, path information, a current location, and an operating status. The UTM may be used to pair the uncrewed aerial vehicle controller with the uncrewed aerial vehicle, identify the uncrewed aerial system, and authorize an operation on the uncrewed aerial system; and may further manage and intervene communication between the uncrewed aerial vehicle controller and the uncrewed aerial vehicle.

FIG. 2 is a schematic diagram of an application scenario according to an embodiment of this application. As shown in FIG. 2, an uncrewed aerial system UAS 200 may exchange information and perform wireless communication with a network system with an uncrewed aerial vehicle traffic management entity UTM 203. For example, an uncrewed aerial vehicle controller 201 or an uncrewed aerial vehicle 202 may exchange information with an access network (radio access network, RAN) 204 and a core network (core network, CN) 205, or may exchange information with the UTM 203 through the access network 204 or the core network 205. The uncrewed aerial vehicle controller 201 may alternatively exchange information with the uncrewed aerial vehicle 202 through the access network 204 or the core network 205, or may exchange information with the uncrewed aerial vehicle 202 through the UTM 203.

It should be understood that the uncrewed aerial vehicle controller 201 and the uncrewed aerial vehicle 202 may be located in a same access network or core network, or may be located in different access networks or core networks. This is not limited in this embodiment of this application.

The uncrewed aerial vehicle UAV 202, also referred to as an uncrewed aerial vehicle or an air robot, is an uncrewed aircraft that uses a radio remote control device and a self-provided program control apparatus, and can complete an aerial mission and various load tasks in an uncrewed driving condition. The uncrewed aerial vehicle in this embodiment of this application may be an uncrewed helicopter, a fixed-wing aircraft, a multi-rotor aircraft, an uncrewed aerial vehicle, or an uncrewed umbrella-wing aircraft; may further include an adjacent space craft, for example, a stratospheric airship, a high-altitude balloon, and a solar uncrewed aerial vehicle; or may be an uncrewed aerial vehicle of various forms such as a four-axis, a six-axis, a single-axis, and vector control. The uncrewed aerial vehicle in this embodiment of this application may be used in fields such as military, industry, civil, agriculture, construction, video, and environmental protection, and special industries, such as military reconnaissance, patrol, aerial photography, environment monitoring, border monitoring, express delivery, and electric power inspection, confirmation of rights, flood control and drought relief, and post-disaster relief, in which the uncrewed aerial vehicle is used for operation. This is not limited in this embodiment of this application.

It should be understood that a specific type of the uncrewed aerial vehicle is not limited in this specification. With the development of intelligence, to be applied to different scenarios or to perform different aerial missions, names of devices having functions of the uncrewed aerial vehicle may be different. For ease of description, in all the embodiments of this application, the foregoing apparatuses that can have the functions of the uncrewed aerial vehicle are collectively referred to as the uncrewed aerial vehicle.

The uncrewed aerial vehicle 202 may be equipped with a plurality of sensors or functional modules, such as a gyroscope (flight posture awareness), an accelerometer, a geomagnetic induction, a barometric pressure sensor (rough control of a hover height), an ultrasonic sensor (accurate control of a low altitude or obstacle avoidance), an optical flow sensor (precisely determining of a hover horizontal position), a GPS module (roughly determining of a horizontal position height), a control circuit, and a compass. An angular rate, a posture, a position, an acceleration, a height, and an air velocity that are of the uncrewed aerial vehicle are collected, so that a normal flight posture of the uncrewed aerial vehicle can be automatically maintained.

It should be understood that names of the modules or the hardware configured for the uncrewed aerial vehicle are merely examples. In specific implementation, each function module may have another name. This is not limited in this embodiment of this application. The uncrewed aerial vehicle in this embodiment of this application may further have more or fewer function modules, or may implement more or fewer functions. This is not limited in this embodiment of this application either.

The uncrewed aerial vehicle controller (UAV controller) 201 is configured to control the uncrewed aerial vehicle 202, for example, control a flight status or a flight action of the uncrewed aerial vehicle. The uncrewed aerial vehicle controller may be a smartphone, a tablet, a laptop computer, a smart watch or a smart remote control, a conventional remote control, a dedicated remote control, or the like; may be an apparatus, for example, a wristband, a ring, a glove, an armband, or a watch, that can be used to control the uncrewed aerial vehicle by using a gesture; may be a head-mounted device, for example, a head cover, that can be used to mentally control the uncrewed aerial vehicle; or may be an apparatus, for example, a smart jacket or a jacket, that can be used to control the uncrewed aerial vehicle by a user body movement.

It should be understood that a specific type of the uncrewed aerial vehicle controller is not limited in this specification. With the development of intelligence, names and forms of devices that have functions of the uncrewed aerial vehicle controller may be different. For ease of description, in all the embodiments of this application, the foregoing apparatuses that can have functions of the uncrewed aerial vehicle controller or can control the uncrewed aerial vehicle are collectively referred to as the uncrewed aerial vehicle controller.

The uncrewed aerial vehicle controller 201 may control a flight status of the uncrewed aerial vehicle 202. For example, the uncrewed aerial vehicle controller may control a direction, an aileron, lifting, tilting, a speed, a throttle, a flap, and the like that are of the uncrewed aerial vehicle, and may further control actions such as turning, climbing, subduction, rolling, hovering, take-off, landing, and the like that are of the uncrewed aerial vehicle. This is not limited in this embodiment of this application.

It should further be understood that the uncrewed aerial system 200 may include one or more uncrewed aerial vehicle controllers 201 and one or more uncrewed aerial vehicles 202. For example, one uncrewed aerial vehicle controller may control one or more uncrewed aerial vehicles, one uncrewed aerial vehicle may also be controlled by one or more uncrewed aerial vehicle controllers, and a plurality of uncrewed aerial vehicle controllers may also cooperatively control a plurality of uncrewed aerial vehicles. This is not limited in this embodiment of this application.

The uncrewed aerial vehicle 202 in the uncrewed aerial system 200 may be any one or more types mentioned above, and the uncrewed aerial vehicle controller 201 may also be any one or more types mentioned above. This is not limited in this embodiment of this application.

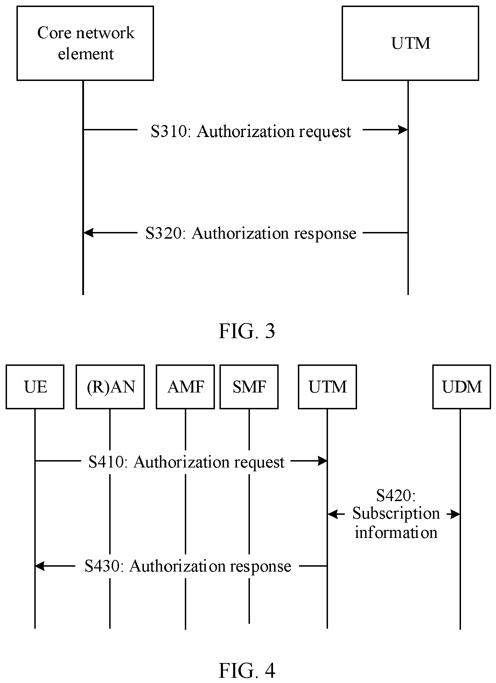

As mentioned above, the uncrewed aerial system 200 can implement long-distance communication by accessing a 3GPP network. However, currently, an issue of how the network authorizes and pairs the uncrewed aerial vehicle and the uncrewed aerial vehicle controller has not been resolved. The following describes in detail the embodiments of this application with reference to FIG. 3.

FIG. 3 is a schematic flowchart of a wireless network communication method according to an embodiment of this application. As shown in FIG. 3, the method may include step S310 and step S320.

Step S310: A core network element sends an authorization request to an uncrewed aerial vehicle traffic management entity UTM.

Step S320: The uncrewed aerial vehicle traffic management entity sends an authorization response to the core network element.

The terminal may be an uncrewed aerial vehicle controller, for example, the UE 101 shown in FIG. 1 or the UAV controller 201 shown in FIG. 2. The terminal may be only configured to control an uncrewed aerial vehicle, or may be not only configured to control an uncrewed aerial vehicle. In other words, in addition to controlling the uncrewed aerial vehicle, the terminal can further have another function. For example, when a smartphone can control the uncrewed aerial vehicle, the smartphone is one uncrewed aerial vehicle controller. In addition to a function of the uncrewed aerial vehicle controller, the smartphone further has other functions such as communication, photographing, and entertainment.

When the terminal is the uncrewed aerial vehicle controller, the terminal can have the function of the uncrewed aerial vehicle controller, and can control the uncrewed aerial vehicle. The authorization request may be understood as an authorization request corresponding to the uncrewed aerial vehicle controller. The authorization request is used to request authorization to control the uncrewed aerial vehicle by the terminal, or may be understood as that the terminal requests authorization to use the function of the uncrewed aerial vehicle controller. The authorization response may be understood as an authorization response corresponding to the uncrewed aerial vehicle controller. The authorization response is used to indicate whether the uncrewed aerial vehicle controller is allowed to control the uncrewed aerial vehicle, and the authorization response may further indicate whether the terminal is allowed to use the function of the uncrewed aerial vehicle controller.

Optionally, when the terminal is the uncrewed aerial vehicle controller, a process in which the uncrewed aerial vehicle controller sends the authorization request may also be understood as a process of requesting to be paired with the uncrewed aerial vehicle. In other words, the uncrewed aerial vehicle controller requests to be paired with the uncrewed aerial vehicle.

In some embodiments, the uncrewed aerial vehicle controller may be paired with the uncrewed aerial vehicle in a process of requesting to control the uncrewed aerial vehicle.

In some embodiments, the uncrewed aerial vehicle controller may alternatively first request to be paired with the uncrewed aerial vehicle, and request to control the uncrewed aerial vehicle at another moment.

In other words, the process in which the uncrewed aerial vehicle controller requests to be paired with the uncrewed aerial vehicle and the process in which the uncrewed aerial vehicle controller requests to control the uncrewed aerial vehicle may be separately performed, or may be simultaneously performed. When the two processes are simultaneously performed, the process in which the uncrewed aerial vehicle controller requests to control the uncrewed aerial vehicle in this application may also include the process in which the uncrewed aerial vehicle controller requests to be paired with the uncrewed aerial vehicle.

The authorization request corresponding to the uncrewed aerial vehicle controller may further include information about the uncrewed aerial vehicle that the uncrewed aerial vehicle controller requests to control, for example, an identifier or an identifier list of the uncrewed aerial vehicle that the uncrewed aerial vehicle controller requests to control. The identifier of the uncrewed aerial vehicle may be a unique identifier in a 3GPP system, may be an identifier unique to the uncrewed aerial vehicle industry, or may be any other identifier that can be used to uniquely determine the uncrewed aerial vehicle. This is not limited in this embodiment of this application. That the authorization request includes information about the uncrewed aerial vehicle that the uncrewed aerial vehicle controller requests to control may be understood as that the uncrewed aerial vehicle controller requests to control a specified uncrewed aerial vehicle.

The authorization request corresponding to the uncrewed aerial vehicle controller may further include information about the uncrewed aerial vehicle controller, for example, a unique identifier of the uncrewed aerial vehicle controller, a UE capability, a location, an owner identifier, an owner address, owner contact information, and an owner qualification certificate that are of the uncrewed aerial vehicle controller, an identifier of an uncrewed aerial vehicle operator that operates the uncrewed aerial vehicle controller, a license and a qualification of the uncrewed aerial vehicle operator, and other data related to the uncrewed aerial vehicle controller. The authorization request may include some or all of the foregoing information, other data that is related to the uncrewed aerial vehicle controller and that is not exhaustive, or the like. This is not limited in this application.

The authorization response corresponding to the uncrewed aerial vehicle controller may include information about an uncrewed aerial vehicle that the uncrewed aerial vehicle controller is allowed to control, for example, an identifier or an identifier list of the uncrewed aerial vehicle that the UTM allows the uncrewed aerial vehicle controller to control. It may be understood as that the UTM allows the uncrewed aerial vehicle controller to control a specified uncrewed aerial vehicle. The authorization response corresponding to the uncrewed aerial vehicle controller may include information about an uncrewed aerial vehicle that the uncrewed aerial vehicle controller is rejected to control, for example, an identifier or an identifier list of the uncrewed aerial vehicle that the UTM rejects the uncrewed aerial vehicle controller to control.

Optionally, the authorization response corresponding to the uncrewed aerial vehicle controller may alternatively include information about an uncrewed aerial vehicle that the uncrewed aerial vehicle controller is allowed to control and information about an uncrewed aerial vehicle that the uncrewed aerial vehicle controller is rejected to control, for example, identifiers of the uncrewed aerial vehicles or one of identifiers of the uncrewed aerial vehicles.

It should be understood that the identifier or the identifier list, included in the authorization request, of the uncrewed aerial vehicle that is requested to be controlled may be the same as or different from the identifier or the identifier list, included in the authorization response, of the uncrewed aerial vehicle that the uncrewed aerial vehicle controller is allowed to control. Both the authorization request and the authorization response may include the foregoing identifier or identifier list of the corresponding uncrewed aerial vehicle, either the authorization request or the authorization response may include the foregoing identifier or identifier list of the corresponding uncrewed aerial vehicle, or neither the authorization request nor the authorization response may include the foregoing identifier or identifier list of the corresponding uncrewed aerial vehicle.

In an example, the authorization request may include the identifier or the identifier list of the uncrewed aerial vehicle that the uncrewed aerial vehicle controller requests to control. The authorization response may include confirmation information, to confirm that the uncrewed aerial vehicle controller is allowed to control the uncrewed aerial vehicle that the uncrewed aerial vehicle controller requests to control.

In another example, the authorization request may include the identifier or the identifier list of the uncrewed aerial vehicle that the uncrewed aerial vehicle controller requests to control. The authorization response may include the identifier or the identifier list of the uncrewed aerial vehicle that the uncrewed aerial vehicle controller is allowed to control, or select an identifier of an uncrewed aerial vehicle that the uncrewed aerial vehicle controller can control from the identifier list of the uncrewed aerial vehicle that is requested to be controlled. The identifier or the identifier list of the uncrewed aerial vehicle that the uncrewed aerial vehicle controller is allowed to control may be determined by a network based on subscription information of the terminal or local configuration information.

In still another example, the authorization request may not include the information about the uncrewed aerial vehicle that the uncrewed aerial vehicle controller requests to control. The authorization response may include an identifier or an identifier list, determined by a system, of an uncrewed aerial vehicle that the uncrewed aerial vehicle controller is allowed to control; or a preconfigured default identifier or identifier list, of the uncrewed aerial vehicle that can be controlled by the uncrewed aerial vehicle controller, in the subscription information or the local configuration information.

In addition, the authorization response corresponding to the uncrewed aerial vehicle controller may further include an identifier of a UAS including the uncrewed aerial vehicle controller and the uncrewed aerial vehicle that the uncrewed aerial vehicle controller is allowed to control, and the identifier may be used in a scenario such as multicast.

Alternatively, the terminal may be an uncrewed aerial vehicle, for example, the UE 101 shown in FIG. 1 or the uncrewed aerial vehicle 202 shown in FIG. 2.

When the terminal is the uncrewed aerial vehicle, the terminal can have a function of the uncrewed aerial vehicle, and can be paired with an uncrewed aerial vehicle controller. The authorization request may be understood as an authorization request corresponding to the uncrewed aerial vehicle. The authorization request is used to request authorization to pair the terminal with the uncrewed aerial vehicle controller, and may be understood as that the terminal requests authorization to use the function of the uncrewed aerial vehicle. The authorization response may be understood as an authorization response corresponding to the uncrewed aerial vehicle. The authorization response is used to indicate whether the uncrewed aerial vehicle is allowed to be paired with the uncrewed aerial vehicle controller, and the authorization response may further indicate that the terminal is allowed to have the function of the uncrewed aerial vehicle.

The authorization request corresponding to the uncrewed aerial vehicle may further include information about an uncrewed aerial vehicle controller that the uncrewed aerial vehicle expects to be paired with, for example, an identifier or an identifier list of an uncrewed aerial vehicle controller that controls the uncrewed aerial vehicle. The identifier of the uncrewed aerial vehicle controller may be a unique identifier in a 3 GPP system, may be an identifier unique to the uncrewed aerial vehicle industry, or may be any other identifier that can be used to uniquely determine the uncrewed aerial vehicle controller. This is not limited in this embodiment of this application. That the authorization request includes information about the uncrewed aerial vehicle that the uncrewed aerial vehicle requests to be paired with may be understood as that the uncrewed aerial vehicle requests to be paired with a specified uncrewed aerial vehicle controller.

The authorization request corresponding to the uncrewed aerial vehicle may further include information about the uncrewed aerial vehicle, for example, a unique identifier, a UE capability, a specification, a model number, a serial number, take-off quality, a location, an owner identifier, an owner address, owner contact information, an owner qualification certificate, a take-off location and time, a task type, path data, and an operating status that are of the uncrewed aerial vehicle, and other data related to the uncrewed aerial vehicle. The authorization request may include some or all of the foregoing information, or other data that is related to the uncrewed aerial vehicle and that is not exhaustive. This is not limited in this application.

The authorization response corresponding to the uncrewed aerial vehicle may include information about an uncrewed aerial vehicle controller that the uncrewed aerial vehicle is allowed to be paired with, for example, an identifier or an identifier list of the uncrewed aerial vehicle controller that the UTM allows the uncrewed aerial vehicle to be paired with. It may be understood that the UTM allows the uncrewed aerial vehicle to be paired with a specified uncrewed aerial vehicle controller.

It should be understood that the identifier or the identifier list, included in the authorization request, of the uncrewed aerial vehicle controller that is requested to be paired with may be the same as or different from the identifier or the identifier list, included in the authorization response, of the uncrewed aerial vehicle controller that the uncrewed aerial vehicle is allowed to be paired with. Both the authorization request and the authorization response may include the foregoing identifier or identifier list of the corresponding uncrewed aerial vehicle controller, either the authorization request or the authorization response may include the foregoing identifier or identifier list of the corresponding uncrewed aerial vehicle controller, or neither the authorization request nor the authorization response may include the foregoing identifier or identifier list of the corresponding uncrewed aerial vehicle controller.

In an example, the authorization request may include the identifier or the identifier list of the uncrewed aerial vehicle controller that the uncrewed aerial vehicle requests to be paired with. The authorization response may include confirmation information, to confirm that the uncrewed aerial vehicle is allowed to be paired with the uncrewed aerial vehicle controller that the uncrewed aerial vehicle expects to be paired with.

In another example, the authorization request may include the identifier or the identifier list of the uncrewed aerial vehicle controller that the uncrewed aerial vehicle requests to be paired with. The authorization response may include the identifier or the identifier list of the uncrewed aerial vehicle controller that the uncrewed aerial vehicle is allowed to be paired with, or select an identifier of an uncrewed aerial vehicle controller that the uncrewed aerial vehicle can be paired with from the identifier list of the uncrewed aerial vehicle controller that is requested to be paired with. The identifier or the identifier list of the uncrewed aerial vehicle that the uncrewed aerial vehicle is allowed to be paired with may be determined by a network based on subscription information of the terminal or local configuration information.

In still another example, the authorization request may not include information about the uncrewed aerial vehicle controller that the uncrewed aerial vehicle requests to be paired with. The authorization response may include an identifier or an identifier list, determined by a system, of an uncrewed aerial vehicle controller that the uncrewed aerial vehicle is allowed to be paired with, or a preconfigured default identifier or identifier list, of the uncrewed aerial vehicle controller that can be controlled by the uncrewed aerial vehicle, in subscription information or local configuration information.

Optionally, the authorization response corresponding to the uncrewed aerial vehicle may further include both the information about the uncrewed aerial vehicle controller that the uncrewed aerial vehicle is allowed to control and information about an uncrewed aerial vehicle controller that the uncrewed aerial vehicle is rejected to control, for example, the identifier of the uncrewed aerial vehicle controller.

It should be understood that, that the uncrewed aerial vehicle requests to be paired with the uncrewed aerial vehicle controller may be understood as that the uncrewed aerial vehicle may be controlled by the uncrewed aerial vehicle controller.

In addition, the authorization response corresponding to the uncrewed aerial vehicle may further include an identifier of a UAS including the uncrewed aerial vehicle and the uncrewed aerial vehicle controller that the uncrewed aerial vehicle is allowed to be paired with, and the identifier may be used in a scenario such as multicast.

It should further be understood that a type of the uncrewed aerial vehicle controller or the uncrewed aerial vehicle is not limited in this application.

In step S310 and step S320, the core network element may be a network element located in the core network 204 shown in FIG. 2, for example, an access and mobility management function network element or a session management function network element, for example, the AMF network element 104 or the SMF network element 105 shown in FIG. 1. The core network element may alternatively be another network element that can exchange information with the UTM.

A process in which the uncrewed aerial vehicle traffic management entity UTM receives the authorization request may be performed by using different procedures. For example, the process may be a process in which the terminal independently initiates the authorization request after the terminal completes registration. Alternatively, the terminal requests authorization from the network in a terminal registration process. An example of requesting authorization in the terminal registration process is described below with reference to a specific embodiment. Details are not described herein.

The uncrewed aerial vehicle traffic management entity UTM may receive the authorization request in a plurality of implementations. Herein, the terminal may be the uncrewed aerial vehicle or the uncrewed aerial vehicle controller. For brevity, the following describes two types of terminals: the uncrewed aerial vehicle or the uncrewed aerial vehicle controller by using the terminal.

In an example, the terminal may send the authorization request to the core network element, and the core network element forwards the authorization request to the uncrewed aerial vehicle traffic management entity.

In another example, the terminal may send indication information to the core network element. The indication information may indicate that the terminal requests to control the uncrewed aerial vehicle or the terminal requests to be paired with the uncrewed aerial vehicle controller. The core network element may automatically generate, based on the indication information, the authorization request to be sent to the UTM. The authorization request may be understood as an authorization request corresponding to the terminal, and the authorization request is used to request authorization to use the function of the uncrewed aerial vehicle controller or the function of the uncrewed aerial vehicle by the terminal.

It should be understood that in the foregoing examples, the authorization request may include one or more types of the information that may be included in the authorization request mentioned above.

Optionally, the authorization request corresponding to the terminal may be carried in a service request message, a protocol data unit (protocol data unit, PDU) session establishment message, a PDU session modification message, or a non-access-stratum (non-access-stratum, NAS) message; and may also be carried in newly added signaling or another message.

Correspondingly, an authorization response corresponding to the terminal may be carried in a service accept message, a PDU session establishment accept message, a PDU session modification accept message, newly added signaling, or another message.

For example, if the authorization request is carried in the PDU session establishment message or the PDU session modification message, the terminal may send the authorization request to the SMF, and the SMF forwards the authorization request or the information in the authorization request to the UTM. Alternatively, the SMF may further parse out the information in the authorization request to automatically generate a new message, and sends the new message to the UTM. The new message is used to request authorization from the UTM.

For example, if the authorization request is carried in a NAS message, the terminal may send the indication information or the authorization request to the AMF, and the AMF forwards the authorization request or the information in the authorization request to the UTM. Alternatively, the AMF generates a new message through parsing of the authorization request and sends the new message to the UTM. The new message is used to request authorization on the terminal from the UTM, for example, request authorization to use the function of the uncrewed aerial vehicle or the function of the uncrewed aerial vehicle controller by the terminal.

In this embodiment of this application, the terminal may request authorization from the UTM through different core network elements, or may send authorization requests in different procedures. An uncrewed aerial system interacts with the network through the core network element, thereby implementing network authorization and pairing of the uncrewed aerial system. Further, the uncrewed aerial vehicle controller and the uncrewed aerial vehicle can communicate with each other through the network, thereby implementing long-distance communication.

In still another example, the UTM may not receive, from the core network element, the authorization request corresponding to the terminal, but may directly receive the authorization request sent by the terminal. In other words, the terminal may directly independently initiate an authorization request procedure. The following describes in detail with reference to FIG. 4.

FIG. 4 is a schematic flowchart of a wireless network communication method according to an embodiment of this application. The method may include step S410 to step S430.

Step S410: A terminal sends an authorization request to an uncrewed aerial vehicle traffic management entity.

In this step, it may be understood that the terminal transparently transmits the authorization request to the UTM.

It should be understood that the terminal may be an uncrewed aerial vehicle controller or an uncrewed aerial vehicle, and the authorization request may include one or more types of the information that may be included in the authorization request mentioned above. For details, refer to the foregoing description of the authorization request. For brevity, details are not described herein again.

Step S420: The uncrewed aerial vehicle traffic management entity requests subscription information related to the terminal from a unified data management UDM, to obtain data used for authorization.

This step is optional. The UTM may obtain the data used for authorization in a plurality of manners. In other words, the UTM may generate an authorization response in a plurality of manners.

In a possible implementation, the UTM may generate the authorization response based on information in the authorization request, for example, an identifier list of an uncrewed aerial vehicle that the terminal requests to control or an identifier list of an uncrewed aerial vehicle controller that the terminal requests to be paired with, or related information of the terminal.

In another possible implementation, the UTM may generate the authorization response based on the subscription information of the terminal. For example, if the subscription information does not include related information of a function of the uncrewed aerial vehicle controller (or the uncrewed aerial vehicle), the terminal is rejected, in the authorization response, to use the function of the uncrewed aerial vehicle controller (or the uncrewed aerial vehicle). If the subscription information includes related information of the function of the uncrewed aerial vehicle controller (or the uncrewed aerial vehicle), the UTM may determine information about an uncrewed aerial vehicle that the uncrewed aerial vehicle controller is allowed to control (or information about an uncrewed aerial vehicle controller that the uncrewed aerial vehicle is allowed to be paired with), and the like, and include the information in the authorization response.

In still another possible implementation, the UTM may generate the authorization response based on local configuration information.

In still another possible implementation, the UTM may generate the authorization response based on one or more types of the information in the authorization request, the subscription information of the terminal, or the local configuration information of the UTM.

Step S430: The uncrewed aerial vehicle traffic management entity sends the authorization response to the terminal.

In this step, it may be understood that the UTM transparently transmits the authorization response to the terminal.

The authorization request sent by the terminal to the UTM and the authorization request received by the terminal from the UTM may be carried in existing message signaling, or may be carried in a newly added message or signaling. The existing or newly added message signaling may be directly sent by the terminal to the UTM.

It should be noted that step S420 may also be applied to the wireless communication method shown in FIG. 3, and may be performed after step S320.

It should be understood that the authorization response may include one or more types of the information that may be included in the authorization response mentioned above. For details, refer to the foregoing description of the authorization response. For brevity, details are not described herein again.

In this embodiment of this application, the terminal directly interacts with the UTM, thereby resolving an issue that the uncrewed aerial vehicle controller obtains authorization to control the uncrewed aerial vehicle or an issue that the uncrewed aerial vehicle is paired with the uncrewed aerial vehicle controller. Therefore, the uncrewed aerial vehicle controller and the uncrewed aerial vehicle can communicate with each other through a network, thereby facilitating long-distance control on the uncrewed aerial vehicle by the uncrewed aerial vehicle controller.

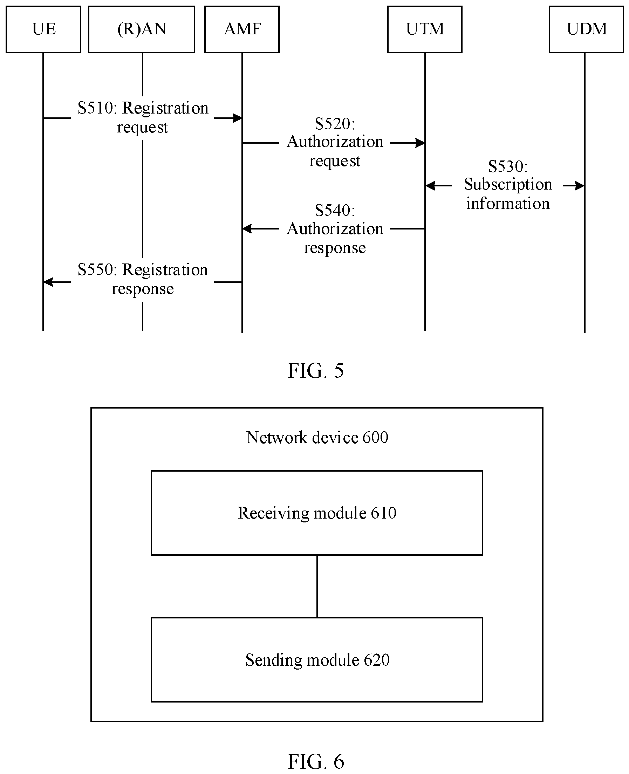

As mentioned above, the terminal may further request authorization from the network in a registration process. The following provides description with reference to the embodiment in FIG. 5.

FIG. 5 is a schematic flowchart of a wireless network communication method according to an embodiment of this application. The method may include step S510 to step S550.

For example, in this embodiment, the core network element may be an AMF network element.

Step S510: A terminal sends a registration request to the AMF network element.

Optionally, the registration request may include function indication information. When the terminal can have a function of an uncrewed aerial vehicle controller, the indication information may indicate that the terminal requests to control an uncrewed aerial vehicle or requests to use the function of the uncrewed aerial vehicle controller. When the terminal can have a function of an uncrewed aerial vehicle, the indication information may indicate that the terminal requests to have the function of the uncrewed aerial vehicle or the terminal requests to be paired with an uncrewed aerial vehicle controller.

Optionally, the function indication information may be carried in a NAS message, and is parallel to the registration request.

Optionally, the registration request may be carried in the NAS message, the NAS message further includes an authorization request of the terminal, and the authorization request is parallel to the registration request.

Optionally, the registration request and the authorization request may be carried in the NAS message, and the authorization request may further include the function indication information.

In a possible implementation, in step S510, the terminal may further send, to the AMF network element, information indicating that the terminal requests authorization or related information of the terminal.

For example, when the terminal requests authorization to use the function of the uncrewed aerial vehicle controller, the terminal may further send, to the AMF network element, an identifier or an identifier list of the uncrewed aerial vehicle that the terminal requests to control, or other information that may be used to determine or uniquely identify the uncrewed aerial vehicle. When the terminal requests authorization to use the function of the uncrewed aerial vehicle, the terminal may further send, to the AMF network element, an identifier or an identifier list of the uncrewed aerial vehicle controller that the terminal expects to be paired with, or other information that may be used to determine or uniquely identify the uncrewed aerial vehicle controller.

For example, when the terminal requests authorization to use the function of the uncrewed aerial vehicle controller, the terminal may further send information or related data about the uncrewed aerial vehicle controller to the AMF network element. The related data herein may be some or all of the information about the uncrewed aerial vehicle controller mentioned above, or other information that is not listed and that is related to the uncrewed aerial vehicle controller. When the terminal requests authorization to use the function of the uncrewed aerial vehicle, the terminal may further send information or related data about the uncrewed aerial vehicle to the AMF network element. The related data herein may be some or all of the information about the uncrewed aerial vehicle mentioned above, or other information that is not listed and that is related to the uncrewed aerial vehicle.

Optionally, the information indicating that the terminal requests authorization or the related information of the terminal may be carried in one or more types of the registration request, the authorization request, the NAS message, or another message.

Step S520: The AMF network element sends the authorization request to the UTM.

There may be a plurality of possible manners of forms and content of the authorization request. As an example instead of a limitation, the following lists several possible implementations.

Optionally, the authorization request may be an authorization request sent by the terminal to the AMF. For example, the AMF forwards, to the UTM, the authorization request sent by the terminal.

Optionally, the authorization request may be generated by the AMF, and the authorization request may include information sent by the terminal to the AMF. For example, after parsing the information that is used for authorization and that is sent by the terminal, the AMF generates the authorization request that includes the foregoing information.

Optionally, the authorization request may be generated by the AMF, and the information used to request authorization in the authorization request may be generated by the AMF. For example, after receiving the indication information sent by the terminal, the AMF may automatically generate other information used to request authorization. The information and the indication information may be in different forms, but content may be the information used to request network authorization.

Step S530: After receiving the authorization request, the UTM requests subscription information related to the terminal from a UDM, to obtain data used for authorization.

In another possible implementation, the related data used for authorization may be obtained based on local configuration information of the UTM.

Step S540: The UTM sends an authorization response to the AMF

When the terminal requests authorization to use the function of the uncrewed aerial vehicle controller, the authorization response is used to indicate whether the terminal is allowed to control the uncrewed aerial vehicle, or indicate to authorize the terminal to use the function of the uncrewed aerial vehicle controller. Alternatively, when the terminal requests authorization to use the function of the uncrewed aerial vehicle, the authorization response is used to indicate whether the terminal is allowed to be paired with the uncrewed aerial vehicle controller, or indicate to authorize the terminal to use the function of the uncrewed aerial vehicle.

There are a plurality of manners of generating the authorization response. As an example instead of a limitation, the following uses an example in which the terminal is the uncrewed aerial vehicle controller for description.

In an example, the UTM may generate the authorization response based on the information in the authorization request sent by the AMF

For example, the authorization request includes the indication information indicating that the terminal requests to control the uncrewed aerial vehicle. The UTM may reject, in the authorization response, the terminal to control the uncrewed aerial vehicle, or allow or confirm that the terminal can control the uncrewed aerial vehicle.

For another example, the authorization request includes information about the uncrewed aerial vehicle that the terminal requests to control, for example, an identifier or an identifier list of the uncrewed aerial vehicle. The UTM may reject, in the authorization response based on the information about the uncrewed aerial vehicle, the terminal to control the uncrewed aerial vehicle, allow or confirm that the terminal controls the uncrewed aerial vehicle. Alternatively, the authorization response includes related information of the uncrewed aerial vehicle that the terminal is allowed to control, for example, an identifier or an identifier list of the uncrewed aerial vehicle that the terminal is allowed to control. The identifier or the identifier list of the uncrewed aerial vehicle may be a part or all of the information of the uncrewed aerial vehicle, included in the authorization request, that the terminal requests to control.

In another example, the UTM may generate the authorization response based on the subscription information or the local configuration information.

For example, the authorization request may include the indication information that the terminal requests to control the uncrewed aerial vehicle. The UTM may determine, based on the subscription information or the local configuration information, related information of the uncrewed aerial vehicle that the terminal is allowed to control, for example, an identifier or an identifier list of the uncrewed aerial vehicle that the terminal is allowed to control. Alternatively, if the subscription information or the local configuration information does not include information related to the uncrewed aerial vehicle controller of the terminal, the UTM may reject the terminal, in the authorization response, to use the function of the uncrewed aerial vehicle controller.

In still another example, the UTM may generate the authorization response based on a plurality of types of the information in the authorization request, the subscription information, or the local configuration information.

For example, the authorization request may include information about the uncrewed aerial vehicle that the terminal requests to control, for example, an identifier or an identifier list of the uncrewed aerial vehicle. The UTM may determine, based on the information and the subscription information of the terminal, whether the terminal is allowed to control the uncrewed aerial vehicle that the terminal requests to control; determine, in the uncrewed aerial vehicle that the terminal requests to control, an uncrewed aerial vehicle that can be controlled by the terminal; or redetermine, for the terminal, an uncrewed aerial vehicle that the terminal is allowed to control.

Optionally, when the UTM allows the terminal to have the function of the uncrewed aerial vehicle controller, the UTM may further allocate an identifier to an uncrewed aerial system including the terminal and the uncrewed aerial vehicle that can be controlled by the terminal, and carry the identifier in the authorization response. The identifier may be used in a multicast scenario. For example, a network may simultaneously notify uncrewed aerial systems to which a plurality of uncrewed aerial vehicles or uncrewed aerial vehicle controllers belong in the uncrewed aerial system.

It should be understood that the foregoing example is described by using only an example in which the terminal is the uncrewed aerial vehicle controller. The foregoing example method is also applicable to a case in which the terminal is the uncrewed aerial vehicle. For brevity, details are not described herein again.

Optionally, when the UTM successfully authorizes the terminal, the UTM may further store information about the terminal. For example, when the authorization request sent by the AMF to the UTM includes the related data of the terminal, after the authorization succeeds, the UTM may store the related data of the terminal, for example, store an identifier, a location, an owner address, and a contact information that are of the uncrewed aerial vehicle controller or the uncrewed aerial vehicle. For the related data of the terminal, refer to the foregoing description.

Step S550: The AMF sends a registration response to the terminal.

After receiving the authorization response, the AMF determines whether the terminal is allowed to be registered with a network, for example, a 3GPP network.

It should be understood that the registration in this embodiment of this application is not limited only to that the terminal is successfully registered with the network, but also includes that the terminal obtains authorization from the UTM, and may also be understood as that the terminal is registered with the UTM.

The registration response may indicate that the terminal is rejected to be registered, or may indicate that the terminal is successfully registered.

The terminal generates the registration response in a plurality of manners, which are used as an example instead of a limitation. The following uses an example for description.

In a possible implementation, when the terminal cannot be registered with the network due to a reason such as an authentication failure, the AMF may carry, to the registration response, information indicating that the terminal is rejected to be registered.

In another possible implementation, the AMF may generate the registration response based on the information in the authorization response or the local configuration information.

For example, if the terminal is allowed, in the authorization response, to use the function of the uncrewed aerial vehicle controller or the function of the uncrewed aerial vehicle, the AMF may respond, in the registration response, that the terminal is successfully registered. The registration response may further include the information included in the authorization response, for example, the information about the uncrewed aerial vehicle that the terminal is allowed to control or the identifier of the uncrewed aerial system.

For example, if the terminal is not allowed, in the authorization response, to use the function of the uncrewed aerial vehicle controller or the function of the uncrewed aerial vehicle, the AMF may select, based on the local configuration information, to respond, in the registration response, that the terminal is successfully registered, and indicate that the terminal is not allowed to use the function of the uncrewed aerial vehicle control or the function of the uncrewed aerial vehicle. Alternatively, the AMF may directly reject, in the authorization response, the terminal to be registered.

In still another possible implementation, the AMF may further generate the registration response based on the information in the registration request, the information in the authorization request, or the local configuration information. The following uses an example in which the terminal is the uncrewed aerial vehicle controller for description.

For example, if the registration request does not indicate whether the terminal is only used to control the uncrewed aerial vehicle, and the terminal is allowed, in the authorization response, to control the uncrewed aerial vehicle, the AMF may respond, in the registration response, that the terminal is successfully registered. Alternatively, the AMF may further send the information in the received authorization response to the terminal.

For example, if the registration request does not indicate whether the terminal is only used to control the uncrewed aerial vehicle, and the terminal is not allowed, in the authorization response, to control the uncrewed aerial vehicle, the AMF may respond, in the registration response based on the local configuration information, that the terminal is successfully registered, and indicate that the terminal is not allowed to control the uncrewed aerial vehicle. Alternatively, the AMF directly rejects the terminal to be registered in the registration response.

For another example, if the registration request indicates that the terminal is only used to control the uncrewed aerial vehicle, and UE is not allowed, in the authorization response, to control the uncrewed aerial vehicle, the AMF may reject, in the registration response, the terminal to be registered.

For another example, if the registration request indicates that the terminal is only used to control the uncrewed aerial vehicle, and the terminal is allowed, in the authorization response, to control the uncrewed aerial vehicle, the AMF may respond, in the registration response, that the terminal is successfully registered. Alternatively, the AMF may further send the information in the received authorization response to the terminal.

For still another example, if the registration request indicates that the terminal is not only used to control the uncrewed aerial vehicle, and the UE is not allowed, in the authorization response, to control the uncrewed aerial vehicle, the AMF responds, in the registration response, that the terminal is successfully registered, and indicates that the terminal is not allowed to control the uncrewed aerial vehicle.

For still another example, if the registration request indicates that the terminal is not only used to control the uncrewed aerial vehicle, and the terminal is allowed, in the authorization response, to control the uncrewed aerial vehicle, the AMF may respond, in the registration response, that the terminal is successfully registered. Alternatively, the AMF may further send the information in the received authorization response to the terminal.

Optionally, whether the terminal is only used to control the uncrewed aerial vehicle may be indicated by using a plurality of forms of the indication information. For example, a bit 1 (or 0) is used to indicate that the terminal is only used to control the uncrewed aerial vehicle, or an indication is performed in another manner. This is not limited in this embodiment of this application.

Optionally, when the terminal is allowed, in the authorization response, to control the uncrewed aerial vehicle, the AMF may indicate, in the registration response, whether the terminal is allowed to control the uncrewed aerial vehicle that the terminal requests to control.

It should be understood that when the authorization succeeds, the AMF may send the registration response including the authorization response to the terminal, or may separately send the authorization response to the terminal. In this embodiment of this application, the AMF may send the registration response to the terminal in the foregoing two forms or another form.

The terminal requests authorization from the network in the registration procedure, thereby resolving an issue of how the terminal interacts with the network to obtain authorization to control the uncrewed aerial vehicle and an issue of pairing the uncrewed aerial vehicle controller with the uncrewed aerial vehicle, thereby facilitating long-distance communication between the uncrewed aerial vehicle controller and the uncrewed aerial vehicle.

Further, the uncrewed aerial vehicle controller provides, in the registration procedure, indication information indicating whether the uncrewed aerial vehicle controller is only used to control the uncrewed aerial vehicle, and the core network element may determine, based on the indication information and the authorization response, whether the uncrewed aerial vehicle controller is allowed to be registered, thereby resolving an issue of how a network side processes registration of different types of uncrewed aerial vehicle controllers.

Optionally, the core network element may be another network element or device.

For example, the terminal may send first information to the core network element. The terminal receives second information from the core network element. The first information is used to request authorization to control the uncrewed aerial vehicle by the terminal, and the second information is used to indicate whether the terminal is allowed to control the uncrewed aerial vehicle. Alternatively, the first information is used to request authorization to pair the terminal with the uncrewed aerial vehicle controller, and the second information is used to indicate whether the terminal is allowed to be paired with the uncrewed aerial vehicle controller. The core network element may interact with another core network element, or may interact with the UTM. Information in the second information may be received by the core network element from the another core network element or the UTM and then forwarded to the terminal, or may be generated by the core network element.

The foregoing describes in detail the method embodiments of this application with reference to FIG. 1 to FIG. 5. The following describes in detail apparatus embodiments of this application with reference to FIG. 6 to FIG. 13. It should be understood that the descriptions of the method embodiments correspond to descriptions of the apparatus embodiments. Therefore, for parts that are not described in detail, refer to the foregoing method embodiments.

FIG. 6 is a schematic structural diagram of a network device according to an embodiment of this application; and The network device 600 in FIG. 6 may be the uncrewed aerial vehicle traffic management entity mentioned above, for example, the UTM 203 shown in FIG. 2. The network device 600 may be configured to implement the foregoing steps performed by the uncrewed aerial vehicle traffic management entity, for example, the steps performed by the uncrewed aerial vehicle traffic management entity in the methods shown in FIG. 3 to FIG. 5. The network device 600 includes a receiving module 610 and a sending module 620.

The receiving module 610 is configured to receive an authorization request.

The sending module 620 is configured to send an authorization response.

A terminal has a function of an uncrewed aerial vehicle controller. The authorization request is used to request authorization to control an uncrewed aerial vehicle by the terminal, and the authorization response is used to indicate whether the terminal is allowed to control the uncrewed aerial vehicle. Alternatively, a terminal has a function of an uncrewed aerial vehicle. The authorization request is used to request authorization to pair the terminal with an uncrewed aerial vehicle controller, and the authorization response is used to indicate whether the terminal is allowed to be paired with the uncrewed aerial vehicle controller.

Optionally, the receiving module 610 is configured to receive the authorization request from the terminal.

Optionally, the sending module 620 is configured to send the authorization response to the terminal.

Optionally, the receiving module 610 is configured to receive the authorization request from an access and mobility management function network element AMF

Optionally, the sending module 620 is configured to send the authorization response to the access and mobility management function network element AMF

Optionally, the first receiving module 610 is configured to receive the authorization request from a session management function network element SMF.

Optionally, the first sending module 620 is configured to send the authorization response to the session management function network element SMF.

Optionally, the network device 600 may further include a generation module, configured to generate, by the network device 600, the authorization response based on one or more types of information in the authorization request, subscription information of the terminal, and local configuration information of the uncrewed aerial vehicle traffic management entity.

Optionally, the authorization request includes an identifier of the uncrewed aerial vehicle that the terminal requests to control.

Optionally, the authorization request includes an identifier of the uncrewed aerial vehicle controller that the terminal requests to be paired with.

Optionally, the authorization response includes an identifier of an uncrewed aerial vehicle that the terminal is allowed to control.

Optionally, the authorization response includes an identifier of an uncrewed aerial vehicle controller that the terminal is allowed to be paired with.

Optionally, the authorization response includes an identifier of an uncrewed aerial system including the uncrewed aerial vehicle and the uncrewed aerial vehicle controller that are allowed to be paired with each other.

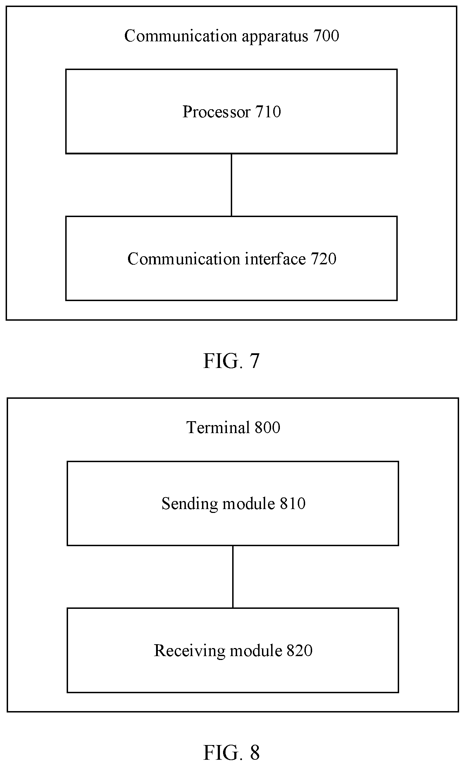

FIG. 7 is a schematic structural diagram of a communication apparatus according to an embodiment of this application. The communication apparatus 700 shown in FIG. 7 may correspond to the uncrewed aerial vehicle traffic management entity described above. The communication apparatus 700 may include at least one processor 710 and a communication interface 720. The communication interface 720 may be used by the communication apparatus 700 to exchange information with another communication apparatus. When a program instruction is executed in the at least one processor 710, the communication apparatus 700 is enabled to implement the foregoing steps or methods or operations or functions performed by the uncrewed aerial vehicle traffic management entity.

FIG. 8 is a schematic structural diagram of a terminal according to an embodiment of this application. The terminal 800 in FIG. 8 may be the terminal mentioned above, for example, the UE 101 shown in FIG. 1, and the UAV controller 201 or the UAV 202 shown in FIG. 2. The terminal 800 may be configured to implement, for example, the foregoing steps performed by the terminal in the method shown in FIG. 4. The terminal 800 may be a sending module 810 and a receiving module 820.

The sending module 810 is configured to send an authorization request to an uncrewed aerial vehicle traffic management entity.

The receiving module 820 is configured to receive an authorization response from the uncrewed aerial vehicle traffic management entity.

The authorization request is used to request authorization to control an uncrewed aerial vehicle by the terminal, and the authorization response is used to indicate whether the terminal is allowed to control the uncrewed aerial vehicle. Alternatively, the authorization request is used to request authorization to pair the terminal with an uncrewed aerial vehicle controller, and the authorization response is used to indicate whether the terminal is allowed to be paired with the uncrewed aerial vehicle controller.

Optionally, the authorization request includes an identifier of the uncrewed aerial vehicle that the terminal requests to control.

Optionally, the authorization request includes an identifier of the uncrewed aerial vehicle controller that the terminal requests to be paired with.

Optionally, the authorization response includes an identifier of an uncrewed aerial vehicle that the terminal is allowed to control.

Optionally, the authorization response includes an identifier of an uncrewed aerial vehicle controller that the terminal is allowed to be paired with.

Optionally, the authorization response includes an identifier of an uncrewed aerial system including the uncrewed aerial vehicle and the uncrewed aerial vehicle controller that are allowed to be paired with each other.

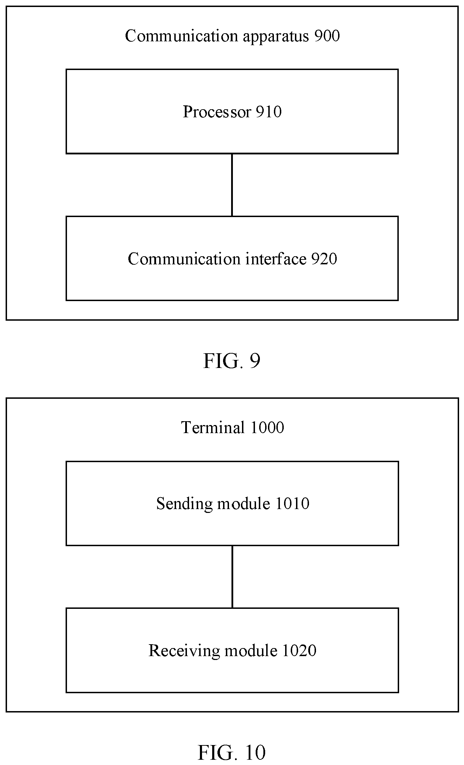

FIG. 9 is a schematic structural diagram of a communication apparatus according to an embodiment of this application. The communication apparatus 900 shown in FIG. 9 may correspond to the terminal described above. The communication apparatus 900 may include at least one processor 910 and a communication interface 920. The communication interface 920 may be used by the communication apparatus 900 to exchange information with another communication apparatus. When a program instruction is executed in the at least one processor 910, the communication apparatus 900 is enabled to implement the foregoing steps or methods or operations or functions performed by the terminal.

FIG. 10 is a schematic structural diagram of a terminal according to an embodiment of this application. The terminal 1000 in FIG. 10 may be the terminal mentioned above, for example, the UE 101 shown in FIG. 1, and the UAV controller 201 or the UAV 202 shown in FIG. 2. The terminal 1000 may be configured to implement, for example, the foregoing steps performed by the terminal in the method shown in FIG. 5. The terminal 1000 includes a sending module 1010 and a receiving module 1020.

The sending module 1010 is configured to send indication information to an access and mobility management function network element AMF in a registration process of the terminal.

The receiving module 1020 is configured to receive a registration response from the AMF

The indication information is used to indicate that the terminal expects to control an uncrewed aerial vehicle, and the registration response is used to indicate whether the terminal is allowed to control the uncrewed aerial vehicle. Alternatively, the indication information is used to indicate that the terminal expects to be paired with an uncrewed aerial vehicle controller, and the registration response is used to indicate whether the terminal is allowed to be paired with the uncrewed aerial vehicle controller.

Optionally, the sending module 1010 is configured to send, to the AMF, an identifier of the uncrewed aerial vehicle that the terminal requests to control.

Optionally, the sending module 1010 is configured to send, to the AMF, an identifier of the uncrewed aerial vehicle controller that the terminal requests to be paired with.

Optionally, when the AMF determines that the terminal is not allowed to control the uncrewed aerial vehicle, the registration response is used to reject the terminal to be registered.

Optionally, when the AMF determines that the terminal is not allowed to control the uncrewed aerial vehicle, the registration response is used to indicate that the terminal is successfully registered and indicate that the terminal is not allowed to control the uncrewed aerial vehicle.

Optionally, when the AMF determines that the terminal is allowed to control the uncrewed aerial vehicle, the registration response is used to indicate that the terminal is successfully registered and indicate that the terminal is allowed to control the uncrewed aerial vehicle.

Optionally, the indication information is further used to indicate whether the terminal is only used to control the uncrewed aerial vehicle. When the indication information indicates that the terminal is only used to control the uncrewed aerial vehicle, and the AMF determines that the terminal is not allowed to control the uncrewed aerial vehicle, the registration response is used to reject the terminal to be registered. Alternatively, when the indication information indicates that the terminal is not only used to control the uncrewed aerial vehicle, and the AMF determines that the terminal is not allowed to control the uncrewed aerial vehicle, the registration response is used to indicate that the terminal is successfully registered and indicate that the terminal is not allowed to control the uncrewed aerial vehicle.

Optionally, the registration response includes an identifier of the uncrewed aerial vehicle that the terminal is allowed to control.

Optionally, the registration response includes an identifier of an uncrewed aerial vehicle controller that the terminal is allowed to be paired with.

Optionally, the registration response includes an identifier of an uncrewed aerial system including the uncrewed aerial vehicle and the uncrewed aerial vehicle controller that are allowed to be paired with each other.

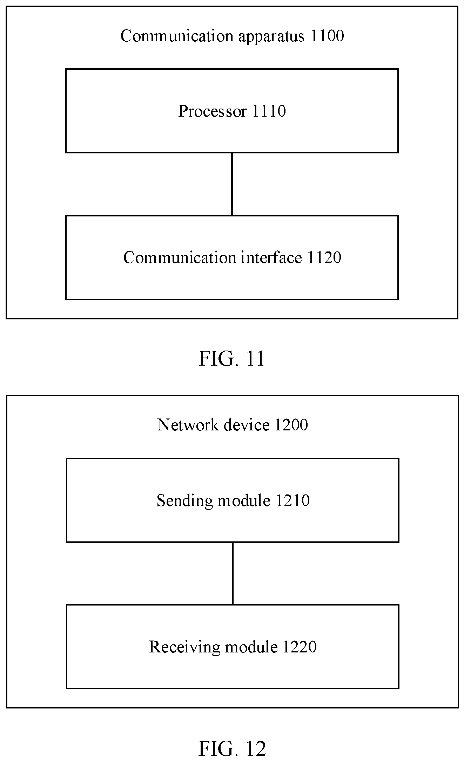

FIG. 11 is a schematic structural diagram of a communication apparatus according to an embodiment of this application. The communication apparatus 1100 shown in FIG. 11 may correspond to the terminal described above. The communication apparatus 1100 may include at least one processor 1110 and a communication interface 1120. The communication interface 1120 may be used by the communication apparatus 1100 to exchange information with another communication apparatus. When a program instruction is executed in the at least one processor 1110, the communication apparatus 1100 is enabled to implement the foregoing steps or methods or operations or functions performed by the terminal.

FIG. 12 is a schematic structural diagram of a network device according to an embodiment of this application. The network device 1200 in FIG. 12 may be the core network element mentioned above, for example, the AMF network element 104 or the SMF network element 105 in FIG. 1. The network device 1200 may be configured to implement the foregoing steps performed by the core network element, for example, the steps performed by the AMF in the method shown in FIG. 5. The network device 1200 may include a sending module 1210 and a receiving module 1220.

The sending module 1210 is configured to send an authorization request to an uncrewed aerial vehicle traffic entity.

The receiving module 1220 is configured to receive an authorization response from the uncrewed aerial vehicle traffic entity.

The authorization request is used to request authorization to control an uncrewed aerial vehicle by a terminal, and the authorization response is used to indicate whether the terminal is allowed to control the uncrewed aerial vehicle. Alternatively, the authorization request is used to request authorization to pair a terminal with an uncrewed aerial vehicle controller, and the authorization response is used to indicate whether the terminal is allowed to be paired with the uncrewed aerial vehicle controller.

Optionally, before that a core network element sends an authorization request to an uncrewed aerial vehicle traffic management entity, the receiving module 1220 is further configured to receive indication information sent by the terminal. The indication information is used to indicate that the terminal expects to control the uncrewed aerial vehicle, or the indication information is used to indicate that the terminal expects to be paired with the uncrewed aerial vehicle controller.

Optionally, the network device 1200 further includes a generation module, configured to generate a registration response based on the authorization response. When the authorization response indicates that the terminal is allowed to control the uncrewed aerial vehicle, the registration response is used to indicate that the terminal is successfully registered and indicate that the terminal is allowed to control the uncrewed aerial vehicle.

Optionally, when the authorization response indicates that the terminal is not allowed to control the uncrewed aerial vehicle, the registration response is used to reject the terminal to be registered.

Optionally, when the authorization response indicates that the terminal is not allowed to control the uncrewed aerial vehicle, the registration response is used to indicate that the terminal is successfully registered and indicate that the terminal is not allowed to control the uncrewed aerial vehicle.

Optionally, the indication information is further used to indicate whether the terminal is only used to control the uncrewed aerial vehicle. When the indication information indicates that the terminal is only used to control the uncrewed aerial vehicle, and the authorization response indicates that the terminal is not allowed to control the uncrewed aerial vehicle, the registration response is used to reject the terminal to be registered. Alternatively, when the indication information indicates that the terminal is not only used to control the uncrewed aerial vehicle, and the authorization response indicates that the terminal is not allowed to control the uncrewed aerial vehicle, the registration response is used to indicate that the terminal is successfully registered and indicate that the terminal is not allowed to control the uncrewed aerial vehicle.

Optionally, the core network element is an access and mobility management function network element AMF or a session management function network element SMF.

Optionally, the receiving module 1220 is further configured to receive, from the terminal, an identifier of the uncrewed aerial vehicle that the terminal requests to control.

Optionally, the receiving module 1220 is further configured to receive, from the AMF, an identifier of the uncrewed aerial vehicle controller that the terminal requests to be paired with.

Optionally, the authorization request includes the identifier of the uncrewed aerial vehicle that the terminal requests to control.

Optionally, the authorization request includes the identifier of the uncrewed aerial vehicle controller that the terminal requests to be paired with.

Optionally, the authorization response includes an identifier of the uncrewed aerial vehicle that the terminal is allowed to control.

Optionally, the authorization response includes an identifier of an uncrewed aerial vehicle controller that the terminal is allowed to be paired with.

Optionally, the authorization response includes an identifier of an uncrewed aerial system including the uncrewed aerial vehicle and the uncrewed aerial vehicle controller that are allowed to be paired with each other.

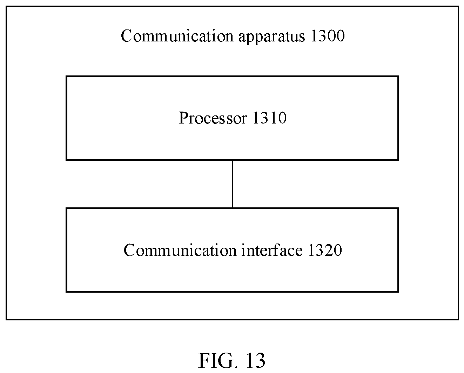

FIG. 13 is a schematic structural diagram of a communication apparatus according to an embodiment of this application. The communication apparatus 1300 shown in FIG. 13 may correspond to the core network element described above. The communication apparatus 1300 may include at least one processor 1310 and a communication interface 1320. The communication interface 1320 may be used by the communication apparatus 1300 to exchange information with another communication apparatus. When a program instruction is executed in the at least one processor 1310, the communication apparatus 1300 is enabled to implement the foregoing steps, methods, operations, or functions performed by the core network element.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless network communication method, comprising:
receiving, by an uncrewed aerial vehicle traffic management entity, an authorization request; and
sending, by the uncrewed aerial vehicle traffic management entity, an authorization response, wherein
the authorization request is used to request authorization to control an uncrewed aerial vehicle by a terminal, and the authorization response is used to indicate whether the terminal is allowed to control the uncrewed aerial vehicle; or
the authorization request is used to request authorization to pair a terminal with an uncrewed aerial vehicle controller, and the authorization response is used to indicate whether the terminal is allowed to be paired with the uncrewed aerial vehicle controller.

2. The method according to claim 1, wherein the receiving, by an uncrewed aerial vehicle traffic management entity, an authorization request comprises:
receiving, by the uncrewed aerial vehicle traffic management entity, the authorization request from the terminal; and
the sending, by the uncrewed aerial vehicle traffic management entity, an authorization response comprises:
sending, by the uncrewed aerial vehicle traffic management entity, the authorization response to the terminal.

3. The method according to claim 1, wherein the receiving, by an uncrewed aerial vehicle traffic management entity, an authorization request comprises:
receiving, by the uncrewed aerial vehicle traffic management entity, the authorization request from an access and mobility management function network element AMF or a session management function network element SMF; and
the sending, by the uncrewed aerial vehicle traffic management entity, an authorization response comprises:
sending, by the uncrewed aerial vehicle traffic management entity, the authorization response to the AMF or the SMF.

4. The method according to any one of claims 1 to 3, further comprising:
generating, by the uncrewed aerial vehicle traffic management entity, the authorization response based on one or more types of information in the authorization request, subscription information of the terminal, and local configuration information of the uncrewed aerial vehicle traffic management entity.

5. The method according to any one of claims 1 to 4, wherein the authorization request comprises an identifier of the uncrewed aerial vehicle that the terminal requests to control; or the authorization request comprises an identifier of the uncrewed aerial vehicle controller that the terminal requests to be paired with.

6. The method according to any one of claims 1 to 5, wherein the authorization response comprises an identifier of an uncrewed aerial vehicle that the terminal is allowed to control; or the authorization response comprises an identifier of an uncrewed aerial vehicle controller that the terminal is allowed to be paired with.

7. A wireless network communication method, comprising:
sending, by a terminal, an authorization request to an uncrewed aerial vehicle traffic management entity; and
receiving, by the terminal, an authorization response from the uncrewed aerial vehicle traffic management entity, wherein
the authorization request is used to request authorization to control an uncrewed aerial vehicle by the terminal, and the authorization response is used to indicate whether the terminal is allowed to control the uncrewed aerial vehicle; or
the authorization request is used to request authorization to pair the terminal with an uncrewed aerial vehicle controller, and the authorization response is used to indicate whether the terminal is allowed to be paired with the uncrewed aerial vehicle controller.

8. The method according to claim 7, wherein the authorization request comprises an identifier of the uncrewed aerial vehicle that the terminal requests to control; or the authorization request comprises an identifier of the uncrewed aerial vehicle controller that the terminal requests to be paired with.

9. The method according to claim 7 or 8, wherein the authorization response comprises an identifier of an uncrewed aerial vehicle that the terminal is allowed to control; or the authorization response comprises an identifier of an uncrewed aerial vehicle controller that the terminal is allowed to be paired with.

10. A wireless network communication method, comprising:
sending, by a terminal, indication information to an access and mobility management function network element AMF in a registration process of the terminal; and
receiving, by the terminal, a registration response from the AMF, wherein
the indication information is used to indicate that the terminal requests to control an uncrewed aerial vehicle, and the registration response is used to indicate whether the terminal is allowed to control the uncrewed aerial vehicle, or
the indication information is used to indicate that the terminal requests to be paired with an uncrewed aerial vehicle controller, and the registration response is used to indicate whether the terminal is allowed to be paired with the uncrewed aerial vehicle controller.

11. The method according to claim 10, further comprising:
sending, by the terminal to the AMF, an identifier of the uncrewed aerial vehicle that the terminal requests to control; or
sending, by the terminal to the AMF, an identifier of the uncrewed aerial vehicle controller that the terminal requests to be paired with.

12. The method according to claim 10 or 11, wherein when the AMF determines that the terminal is not allowed to control the uncrewed aerial vehicle, the registration response is used to reject the terminal to be registered.

13. The method according to claim 10 or 11, wherein when the AMF determines that the terminal is not allowed to control the uncrewed aerial vehicle, the registration response is used to indicate that the terminal is successfully registered and indicate that the terminal is not allowed to control the uncrewed aerial vehicle.

14. The method according to any one of claims 10 to 13, wherein when the AMF determines that the terminal is allowed to control the uncrewed aerial vehicle, the registration response is used to indicate that the terminal is successfully registered, and indicate that the terminal is allowed to control the uncrewed aerial vehicle and/or indicate whether the terminal is allowed to control the uncrewed aerial vehicle.

15. The method according to any one of claims 10 to 14, wherein the indication information is further used to indicate whether the terminal is only used to control the uncrewed aerial vehicle; and
when the indication information indicates that the terminal is only used to control the uncrewed aerial vehicle, and the AMF determines that the terminal is not allowed to control the uncrewed aerial vehicle, the registration response is used to reject the terminal to be registered, or
when the indication information indicates that the terminal is not only used to control the uncrewed aerial vehicle, and the AMF determines that the terminal is not allowed to control the uncrewed aerial vehicle, the registration response is used to indicate that the terminal is successfully registered and indicate that the terminal is not allowed to control the uncrewed aerial vehicle.

16. The method according to any one of claims 10 to 15, wherein the registration response comprises an identifier of the uncrewed aerial vehicle that the terminal is allowed to control; or the registration response comprises an identifier of the uncrewed aerial vehicle controller that the terminal is allowed to be paired with.

17. A wireless network communication method, comprising:
sending, by a core network element, an authorization request to an uncrewed aerial vehicle traffic management entity; and
receiving, by the core network element, an authorization response from the uncrewed aerial vehicle traffic management entity, wherein
the authorization request is used to request authorization to control an uncrewed aerial vehicle by a terminal, and the authorization response is used to indicate whether the terminal is allowed to control the uncrewed aerial vehicle; or
the authorization request is used to request authorization to pair a terminal with an uncrewed aerial vehicle controller, and the authorization response is used to indicate whether the terminal is allowed to be paired with the uncrewed aerial vehicle controller.

18. The method according to claim 17, wherein before the sending, by a core network element, an authorization request to an uncrewed aerial vehicle traffic management entity, the method further comprises:
receiving indication information sent by the terminal, wherein
the indication information is used to indicate that the terminal requests to control the uncrewed aerial vehicle, or
the indication information is used to indicate that the terminal requests to be paired with the uncrewed aerial vehicle controller.

19. The method according to claim 17 or 18, further comprising:
generating, by the core network element, a registration response based on the authorization response, wherein
when the authorization response indicates that the terminal is allowed to control the uncrewed aerial vehicle, the registration response is used to indicate that the terminal is successfully registered, and indicate that the terminal is allowed to control the uncrewed aerial vehicle and/or indicate whether the terminal is allowed to control the uncrewed aerial vehicle.

20. The method according to any one of claims 17 to 19, wherein
when the authorization response indicates that the terminal is not allowed to control the uncrewed aerial vehicle, the registration response is used to reject the terminal to be registered.

21. The method according to any one of claims 17 to 19, wherein
when the authorization response indicates that the terminal is not allowed to control the uncrewed aerial vehicle, the registration response is used to indicate that the terminal is successfully registered and indicate that the terminal is not allowed to control the uncrewed aerial vehicle.

22. The method according to any one of claims 17 to 21, wherein the indication information is further used to indicate whether the terminal is only used to control the uncrewed aerial vehicle; and
when the indication information indicates that the terminal is only used to control the uncrewed aerial vehicle, and the authorization response indicates that the terminal is not allowed to control the uncrewed aerial vehicle, the registration response is used to reject the terminal to be registered, or
when the indication information indicates that the terminal is not only used to control the uncrewed aerial vehicle, and the authorization response indicates that the terminal is not allowed to control the uncrewed aerial vehicle, the registration response is used to indicate that the terminal is successfully registered and indicate that the terminal is not allowed to control the uncrewed aerial vehicle.

23. The method according to any one of claims 17 to 22, wherein the core network element is an access and mobility management function network element AMF or a session management function network element SMF.

24. The method according to any one of claims 17 to 23, further comprising:
receiving, by the core network element from the terminal, an identifier of the uncrewed aerial vehicle that the terminal requests to control; or
receiving, by the core network element from the terminal, an identifier of the uncrewed aerial vehicle controller that the terminal requests to be paired with.

25. The method according to any one of claims 17 to 24, wherein the authorization request comprises the identifier of the uncrewed aerial vehicle that the terminal requests to control; or
the authorization request comprises the identifier of the uncrewed aerial vehicle controller that the terminal requests to be paired with.

26. The method according to any one of claims 17 to 25, wherein the authorization response comprises an identifier of the uncrewed aerial vehicle that the terminal is allowed to control; or
the authorization response comprises an identifier of the uncrewed aerial vehicle controller that the terminal is allowed to be paired with.

27. A wireless network communication method, comprising:
sending, by a terminal, an authorization request to an uncrewed aerial vehicle traffic management entity; and
sending, by the uncrewed aerial vehicle traffic management entity, an authorization response to the terminal, wherein
the authorization request is used to request authorization to control an uncrewed aerial vehicle by the terminal, and the authorization response is used to indicate whether the terminal is allowed to control the uncrewed aerial vehicle; or
the authorization request is used to request authorization to pair the terminal with an uncrewed aerial vehicle controller, and the authorization response is used to indicate whether the terminal is allowed to be paired with the uncrewed aerial vehicle controller.

28. A wireless network communication method, comprising:
sending, by a terminal, first information to a core network element; and
sending, by the core network element, second information to the terminal, wherein
the first information is used to request authorization to control an uncrewed aerial vehicle by the terminal, and the second information is used to indicate whether the terminal is allowed to control the uncrewed aerial vehicle, or
the first information is used to request authorization to pair the terminal with an uncrewed aerial vehicle controller, and the second information is used to indicate whether the terminal is allowed to be paired with the uncrewed aerial vehicle controller.

29. A wireless network communication method, comprising:
sending, by a core network element, an authorization request to an uncrewed aerial vehicle traffic management entity; and
sending, by the uncrewed aerial vehicle traffic management entity, an authorization response to the core network element, wherein
the authorization request is used to request authorization to control an uncrewed aerial vehicle by the terminal, and the authorization response is used to indicate whether the terminal is allowed to control the uncrewed aerial vehicle; or
the authorization request is used to request authorization to pair the terminal with an uncrewed aerial vehicle controller, and the authorization response is used to indicate whether the terminal is allowed to be paired with the uncrewed aerial vehicle controller.

30. A network device, comprising a module configured to perform the method according to any one of claims 1 to 6.

31. A terminal, comprising a module configured to perform the method according to any one of claims 7 to 16.

32. A network device, comprising a module configured to perform the method according to any one of claims 17 to 26.

33. A communication system, comprising a terminal and an uncrewed aerial vehicle traffic management entity, wherein
the terminal is configured to send an authorization request to the uncrewed aerial vehicle traffic management entity; and
the uncrewed aerial vehicle traffic management entity is configured to send an authorization response to the terminal, wherein
the authorization request is used to request authorization to control an uncrewed aerial vehicle by the terminal, and the authorization response is used to indicate whether the terminal is allowed to control the uncrewed aerial vehicle; or
the authorization request is used to request authorization to pair the terminal with an uncrewed aerial vehicle controller, and the authorization response is used to indicate whether the terminal is allowed to be paired with the uncrewed aerial vehicle controller.

34. A communication system, comprising a terminal and a core network element, wherein
the terminal is configured to send first information to the core network element; and
the core network element is configured to send second information to the terminal, wherein
the first information is used to request authorization to control an uncrewed aerial vehicle by the terminal, and the second information is used to indicate whether the terminal is allowed to control the uncrewed aerial vehicle, or
the first information is used to request authorization to pair the terminal with an uncrewed aerial vehicle controller, and the second information is used to indicate whether the terminal is allowed to be paired with the uncrewed aerial vehicle controller.

35. A communication system, comprising a core network element and an uncrewed aerial vehicle traffic management entity, wherein
the core network element is configured to send an authorization request to the uncrewed aerial vehicle traffic management entity; and
the uncrewed aerial vehicle traffic management entity is configured to send an authorization response to the core network element, wherein
the authorization request is used to request authorization to control an uncrewed aerial vehicle by the terminal, and the authorization response is used to indicate whether the terminal is allowed to control the uncrewed aerial vehicle; or
the authorization request is used to request authorization to pair the terminal with an uncrewed aerial vehicle controller, and the authorization response is used to indicate whether the terminal is allowed to be paired with the uncrewed aerial vehicle controller.
